# EUROPEAN PATENT SPECIFICATION

(11) **EP 4 400 396 B1**
(45) Date of publication and mention of the grant of the patent: **16.09.2026**
(21) Application number: 24152001.4
(22) Date of filing: 16.01.2024
(51) Int. Cl.: B62J 45/412, B62M 6/50, B62M 6/55

(54) **BICYCLE CONTROL SYSTEM**
FAHRRADSTEUERUNGSSYSTEM
SYSTÈME DE COMMANDE DE BICYCLETTE

(30) Priority: 16.01.2023 US 202318154931
(43) Date of publication of application: 17.07.2024
(73) Proprietor: SRAM, LLC., Chicago, IL 60607 (US)
(72) Inventor: Dueweling, Sebastian, 88316 Isny (DE); Hahn, Sage, Chicago, 60625 (US); Fuss, Dominique, 97717 Euerdorf (DE)
(74) Representative: Thum, Bernhard

(56) References cited:
- US-A1- 2017 247 080
- US-A1- 2018 086 417
- US-A1- 2020 262 510

## Description

### Background

### 1. Field of the Disclosure

The present disclosure is generally directed to an electric bicycle, and more particularly, to control of the electric bicycle.

### 2. Description of Related Art

A bicycle control system for an electric bicycle tracks a speed of the electric bicycle. Bicycle speed information is typically provided by a sensor (e.g., reed switch, Hall effect sensor) mounted in proximity to a wheel (e.g., a rear wheel) of the electric bicycle, which detects a magnet mounted to the wheel. The sensor typically generates one pulse per revolution of the wheel each time the magnet passes by the sensor. A time between sensor pulses may be used to calculate an angular velocity of the wheel (e.g., wheel revolutions per minute (RPM)). A speed of the electric bicycle may be calculated by multiplying the wheel RPM by a circumference of the wheel, and the calculated speed of the electric bicycle may be used for control of the electric bicycle.
US 2020/262510 A1 discloses a bicycle with an electric pedal assist motor capable of driving a chainring independent of cranks, which includes wheel speed sensors and crank cadence sensors. The wheel speed and crank cadence sensors measure wheel speed and crank cadence, respectively, and provide the measured wheel speed and crank cadence to controller of the bicycle. The controller activates motor overdrive based on the measured wheel speed and/or the measured crank cadence.
US 2017/247080 A1 discloses a bicycle controller and bicycle drive device that improves the stability of the behavior of a bicycle. The bicycle controller includes an electronic control unit that reduces the output of a motor, which is configured to assist in propulsion of the bicycle, in accordance with an angular acceleration of a rotary body. The rotary body is included in a human power transmission path extending from an input for human power to a coupling portion coupled to a drive wheel.
US 2018/086417 A1, which shows the preamble of claim 1, relates to a control method for regulating the electric motor of an electric bicycle for push assistance for the electric bicycle.

### Summary

In one example, an electronic component for a bicycle includes a processor configured to receive data from a sensor and determine a first speed and a second speed of the bicycle based on a subset of the received data. The processor is further configured to determine an acceleration of the bicycle based on the determined first speed and the determined second speed of the bicycle, and compare the determined acceleration of the bicycle to a predetermined threshold acceleration. The processor is further configured to control the bicycle based on the comparison.

In one example, the processor is further configured to identify wheel slip of a bicycle wheel of the bicycle when, based on the comparison, the determined acceleration of the bicycle is greater than the predetermined threshold acceleration.

In one example, the bicycle is an electric bicycle.

In one example, the control of the electric bicycle based on the comparison includes control of an assist motor of the electric bicycle based on the comparison.

In one example, the control of the assist motor of the electric bicycle based on the comparison includes reduction of a power of the assist motor for a predetermined period of time when, based on the comparison, the determined acceleration of the electric bicycle is greater than the predetermined threshold acceleration.

In one example, the predetermined threshold acceleration is a maximum acceleration of the electric bicycle.

In one example, the processor is further configured to identify a wheel lock of a bicycle wheel of the bicycle when, based on the comparison, the determined acceleration of the electric bicycle is less than the predetermined threshold acceleration.

In one example, the control of the bicycle based on the comparison includes deactivation of electronic shifting of the bicycle for a predetermined period of time when, based on the comparison, the determined acceleration of the bicycle is less than the predetermined threshold acceleration.

In one example, the predetermined threshold acceleration is a minimum acceleration of the bicycle.

In one example, the sensor is a bicycle wheel speed sensor and is configured to sense at least one sensed element disposed about a bicycle wheel of the bicycle as the at least one sensed element rotates through a proximal region of the sensor.

In one example, the determination of the first speed includes identification of a first time point and a second time point from the subset of the received data. The identified first time point and the identified second time point are times at which the bicycle wheel speed sensor senses a respective sensed element of the at least one sensed element. The second time point is after the first time point. The determination of the first speed further includes determination of a first elapsed time based on a difference between the identified second time point and the identified first time point, and determination of the first speed based on a size of the bicycle wheel and the determined first elapsed time. The determination of the second speed includes identification of the second time point and a third time point from the subset of the received data. The identified third time point is a time at which the bicycle wheel speed sensor senses a respective sensed element of the at least one sensed element. The third time point is after the second time point. The determination of the second speed further includes determination of a second elapsed time based on a difference between the identified third time point and the identified second time point, and determination of the second speed based on the size of the bicycle wheel and the determined second elapsed time.

In one example, the processor is further configured to determine a third speed of the bicycle based on the subset of the received data. The determination of third speed of the bicycle includes identification of the third time point and a fourth time point from the subset of the received data. The identified fourth time point is a time at which the bicycle wheel speed sensor senses a respective sensed element of the at least one sensed element. The fourth time point is after the third time point. The determination of the third speed of the bicycle further includes determination of a third elapsed time based on a difference between the identified fourth time point and the identified third time point, and determination of the third speed based on the size of the bicycle wheel and the determined third elapsed time. The determined acceleration of the bicycle is also based on the determined third speed of the bicycle.

In one example, the processor is further configured to determine a first acceleration of the bicycle based on the first speed of the bicycle and the second speed of the bicycle, and determine a second acceleration of the bicycle based on the second speed of the bicycle and the third speed of the bicycle. The determination of the acceleration of the bicycle is based on the determined first acceleration of the bicycle and the determined second acceleration of the bicycle.

In one example, the electronic component further includes a memory in communication with the processor. The memory is configured to store the determined first speed of the bicycle, the determined second speed of the bicycle, and the determined third speed of the bicycle as first samples of a first sample buffer, respectively. The memory is configured to store the determined first acceleration of the bicycle and the determined second acceleration of the bicycle as second samples of a second sample buffer, respectively.

In one example, the received data includes a plurality of data points that identify receipt of magnetic field pulses by the sensor at a plurality of time points, respectively. The plurality of time points include the first time point, the second time point, the third time point, the fourth time point, and one or more additional time points. The processor is further configured to determine one or more additional speeds of the bicycle based on the fourth time point and the one or more additional time points, and determine one or more additional accelerations of the bicycle based on the determined third speed of the bicycle and the determined one or more additional speeds of the bicycle. The memory is further configured to store the determined one or more additional speeds of the bicycle as one or more additional first samples of the first sample buffer, respectively, and store the determined one or more additional accelerations of the bicycle as one or more additional second samples of the second sample buffer, respectively.

In one example, the determination of the acceleration of the bicycle includes an average of the second samples and the one or more additional second samples stored in the second sample buffer of the memory.

In one example, the first sample buffer is configured to store a first predetermined number of first samples, and the second sample buffer is configured to store a second predetermined number of second samples.

In one example, the processor is further configured to receive additional data from the sensor. The received additional data identifies a fifth time point at which the bicycle wheel speed sensor senses a respective sensed element of the at least one sensed element. The fifth time point is after the fourth time point. The processor is further configured to determine a fourth speed based on the fourth time point and the fifth time point, and determine a third acceleration based on the determined third speed and the determined fourth speed of the bicycle. When a number of the first samples stored in the first sample buffer is the same as the first predetermined number of first samples, such that the first sample buffer is full, the memory is configured to store the determined fourth speed of the bicycle as one of the first samples of the first sample buffer and replace an oldest of the first samples. When a number of the second samples stored in the second sample buffer is the same as the second predetermined number of second samples, such that the second sample buffer is full, the memory is configured to store the determined third acceleration of the bicycle as one of the second samples of the second sample buffer and replace an oldest of the second samples. The determination of the acceleration of the bicycle comprises an average of the second samples over a predetermined time period.

In one example, a system for controlling a bicycle includes a sensor configured to generate first data. The first data includes a plurality of data points generated at a plurality of time points, respectively. The plurality of data points identify reception of magnetic field pulses at the plurality of time points, respectively. The system also includes a memory configured to store wheel size data for a wheel of the bicycle, and a processor in communication with the memory and the sensor. The processor is configured to receive the first data from the sensor, determine a first speed and a second speed of the bicycle based on a subset of the received data and the stored wheel size data, and determine an acceleration of the bicycle based on the determined first speed and the determined second speed of the bicycle. The processor is further configured to compare the determined acceleration of the bicycle to a predetermined threshold acceleration, and control the bicycle based on the comparison.

In one example, a controller for a bicycle includes a processor configured to receive data from a sensor. The received data includes a plurality of data points generated at a plurality of time points, respectively. The plurality of data points identify reception of magnetic field pulses at the plurality of time points, respectively. The processor is further configured to determine a plurality of speeds of the bicycle based on respective subsets of the received data, determine a plurality of accelerations of the bicycle based on the determined plurality of speeds of the bicycle, and determine an average acceleration of the determined plurality of accelerations of the bicycle over a predetermined time period. The processor is further configured to compare the determined average acceleration of the bicycle to a predetermined threshold acceleration, and control the bicycle based on the comparison. The invention is defined by the independent claims and preferred embodiments are formulated as dependent claims.

### Brief Description of the Drawings

Objects, features, and advantages of the present invention will become apparent upon reading the following description in conjunction with the drawing figures, in which:
FIG. 1 shows a side view of one example of an electric bicycle with component control in accordance with the teachings of this disclosure;
FIG. 2 is a side view of one example of a rear derailleur;
FIG. 3 is a block diagram of an embodiment of an electromechanical control system;
FIG. 4 is a block diagram of an embodiment of an operation component;
FIG. 5 is a flowchart of an embodiment of a method for automatic shifting;
FIG. 6 is a flowchart of an embodiment of a method for controlling one or more components of a bicycle including a first embodiment of a mechanism for detecting a wheel event;
FIG. 7 is a flowchart of an embodiment of a method for identifying a wheel event on a bicycle;
FIG. 8 illustrates an example of a first in first out (FIFO) storage method;
FIG. 9 is a plot of wheel speed versus time showing a wheel slipping event identified by a second embodiment of a mechanism for detecting a wheel event;
FIG. 10 is a plot of wheel speed versus time showing a wheel lock event identified by the second embodiment of the mechanism for detecting a wheel event;
FIG. 11 is a plot of acceleration versus time showing a wheel slipping event identified by a third embodiment of a mechanism for detecting a wheel event; and
FIG. 12 is a plot of acceleration versus time showing a wheel lock event identified by the third embodiment of the mechanism for detecting a wheel event.

### Detailed Description of the Disclosure

A bicycle with an electric pedal assist motor capable of driving a chainring independent of cranks (e.g., an electric bicycle) is provided. The bicycle includes wheel speed sensors and crank cadence sensors. The wheel speed sensors and the crank cadence sensors measure wheel speed and crank cadence, respectively, and provide the measured wheel speed and crank cadence to an electric rear derailleur or a controller (e.g., including a processor) of the bicycle. The electric rear derailleur, for example, is configured to shift gears of the bicycle (e.g., when executing an automatic shifting method) and/or instruct an e-bike controller to activate motor overdrive based on the measured wheel speed and/or the measured crank cadence.

The wheel speed sensors include, for example, a reed switch or a Hall effect sensor mounted in proximity to a rear wheel of the bicycle. The wheel speed sensor detects a magnet mounted to the rear wheel. The wheel speed sensor typically generates one pulse per revolution of the rear wheel, each time the magnet passes by the wheel speed sensor.

The automatic shifting method executed by the electric bicycle, for example, controls gear shifting using wheel speed sensor data and by adjusting a gear index to keep a target cadence within a desired range. The wheel speed sensor data for a slipping wheel reports wrong speed information to the automatic shifting method, resulting in unwanted gear shifts. For example, the automatic shifting method receives speed information that is higher than an actual speed of the electric bicycle, causing a higher gear-ratio to be selected. In this situation, on an electric bicycle with additional motor assist, an assist motor of the electric bicycle further increases wheel speed due to the higher gear-ratio. This results in even more shift events within the automatic shifting method to higher gear indices. This situation may end in an avalanche effect of gear-shifting, resulting in a safety critical situation causing harm to a rider.

A locked wheel lets the automatic shifting method assume a speed of 0 kph, resulting in gear shifts to a smallest gear ratio. This is not what the rider wants when the wheel is locked; the rider expects the bicycle to not shift gears when the wheel is locked over a short period of time.

A control system of one or more of the present embodiments includes, for example, a wheel speed sensor configured to determine a speed of the bicycle at a wheel (e.g., the rear wheel) of the bicycle, and a processor in communication with the wheel speed sensor. Bicycle speed information is derived by measuring time between impulses generated each time a part of a rotating wheel (e.g., a magnet attached to the rotating wheel) passes the wheel speed sensor. A time between two consecutive impulses is measured, and knowing a number of impulses per wheel rotation and a diameter of the wheel, the processor may determine wheel rotation frequency or a wheel speed based on the measured time. Each determined wheel rotation frequency or wheel speed is stored as a sample within a sample buffer of a memory of the control system.

The processor may determine a wheel acceleration by deriving two consecutive samples of the sample buffer (e.g., two consecutively determined wheel speeds) over time. These acceleration values are stored to another sample buffer. By averaging the acceleration samples over a predetermined number of samples (e.g., corresponding to a predetermined amount of time), system inaccuracy effects may be compensated for by a cost of responsiveness.

A maximum acceleration threshold may be defined based on a maximum acceleration a rider may achieve on an electric bicycle. In other words, an acceleration of the bicycle above the maximum acceleration threshold may be unrealistic. The processor may compare the average of the acceleration samples to the defined maximum acceleration threshold, and when, based on the comparison, the average of the acceleration samples is greater than the maximum acceleration threshold, the processor may assume a current wheel acceleration is caused by a slipping wheel.

A maximum deceleration threshold (e.g., a negative acceleration value or a minimum acceleration threshold) may be defined based on a maximum deceleration a rider may achieve on an electric bicycle. In other words, a deceleration of the bicycle above the maximum deceleration threshold (e.g., an acceleration of the bicycle below the minimum acceleration threshold) may be unrealistic. The processor may compare the average of the acceleration samples to the defined minimum acceleration threshold, for example, and when, based on the comparison, the average of the acceleration samples is less than the minimum acceleration threshold, the processor may assume a current wheel acceleration is caused by a locked wheel.

The processor may initiate countermeasures (e.g., via control one or more components of the bicycle) when the processor detects the slipping wheel or the locked wheel. Countermeasures may include for example, deactivation of the automatic shifting method for a period of time or reduction of motor power for a period of time.

A significant advantage of the disclosed bicycle control is that determining acceleration of the bicycle based on wheel speed information does not require any additional sensor hardware, as wheel speed measurement using, for example, a reed switch or a Hall effect sensor is currently provided on state of the art electric bicycles. Accordingly, the disclosed bicycle control provides low cost detection of wheel slipping and wheel lock to avoid a safety critical situation for a rider.

Wireless communication between components is described herein. Although the present specification describes components and functions that may be implemented in particular wireless communication embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In an embodiment, components of the bicycle described herein will communicate with each other. In the case of wireless communication, the components will initially be paired so as to allow secure communication between components on the bicycle without interference from devices not associated with the system. One or more of the components may also be paired with a separate device such as a computer, tablet, or phone (e.g., a mobile computing device). This paired device may provide the user interface to allow the user to communicate with the components on the bicycle. Examples of communication are updating firmware, setting variables, and running diagnostic tools and analysis.

These and other objects, features, and advantages of the disclosed bicycle component control will become apparent to those having ordinary skill in the art upon reading this disclosure. Throughout the drawing figures, where like reference numbers are used, the like reference numbers represent the same or substantially similar parts among the various disclosed examples. Also, specific examples are disclosed and described herein that utilize specific combinations of the disclosed aspects, features, and components of the disclosure. However, it is possible that each disclosed aspect, feature, and/or component of the disclosure may, in other examples not disclosed or described herein, be used independent of or in different combinations with other of the aspects, features, and components of the disclosure.

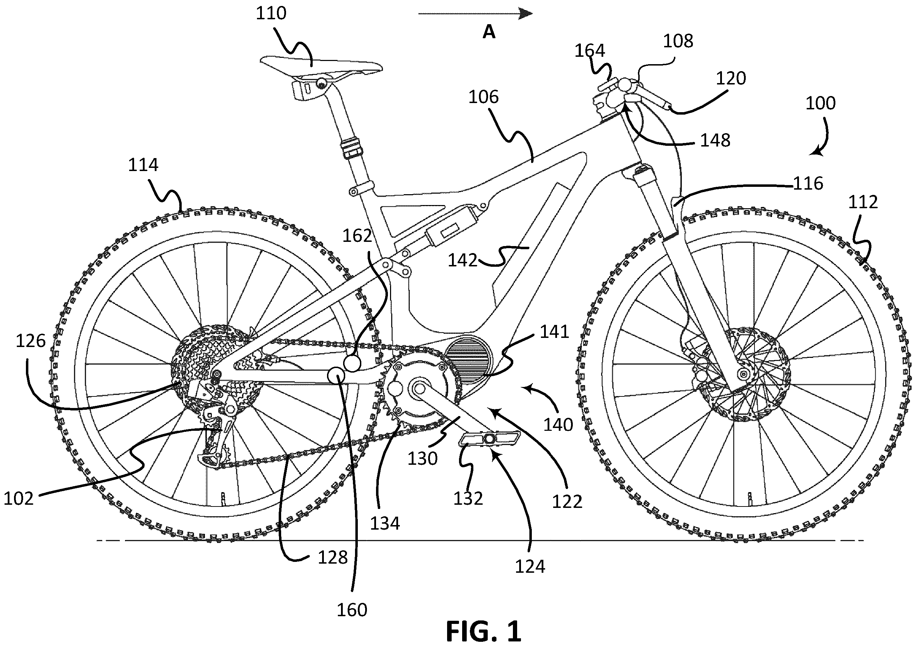

Turning now to the drawings, FIG. 1 illustrates an example bicycle 100 (e.g., electric bicycle or e-bike) that includes a frame 106, handlebars 108, and a seat 110. The bicycle 100 also includes a first or front wheel 112 and a second or rear wheel 114. A front brake 116 and/or a rear brake are included to brake the front wheel 112 and the rear wheel 114, respectively. The front brake 116 and/or the rear brake are controlled by at least one brake actuator 120. The bicycle 100 includes a drive train 122. The drive train 122 of FIG. 1 includes a crank assembly 124 operatively coupled to a rear cassette 126 via a chain 128. The crank assembly 124 includes crank arms 130 and pedals 132, as well as at least one chainring 134 configured to operatively couple with the chain 128 to transmit force and/or power exerted onto the crank assembly 124 to the chain 128. This force and/or power is transmitted to the rear cassette 126 by the chain 128, whereby a motivating force and/or power is transmitted to the rear wheel 114 from the rear cassette 126. While the drive train 122 includes a gear changer (e.g., a rear derailleur 102 in the illustrated embodiment), other transmissions such as an internal gear hub, a gear box, and/or a continuously variable transmission may be applied to the bicycle 100.

The drive train 122 may also include a power assist device 140. Pedaling torque is applied to the crank assembly 124 by a rider using the pedals 132 and crank arms 130. The power assist device 140 is configured to assist the rotation of the rear wheel 114. In the illustrated embodiment, the power assist device 140 is configured to assist the rotation of the rear wheel 114 via a coupled connection to the crank assembly 124. The power assist device 140 includes a power assist motor 141 that is powered by a remote power source 142.

The chain 128 may be moved between individual sprockets of the rear cassette 126 using the gear changer, such as the rear derailleur 102, as shown in FIG. 1. The rear derailleur 102, for example, is an electric gear changer that is controlled by signals indicating that a shift command has been actuated by the bicycle operator, or rider. The electric rear derailleur 102 may be alternatively powered by an integrated power source or the remote power source 142, using a power conductive connector or cable. The power may be provided from the remote power source 142 through the cable to an intermediate power connector that is coupled to the rear derailleur 102. The shift commands are implemented using an electric actuator 148 that is manually operable by the rider. The signals indicating the shift commands may be communicated to the electric rear derailleur 102 using wired and/or wireless communication techniques.

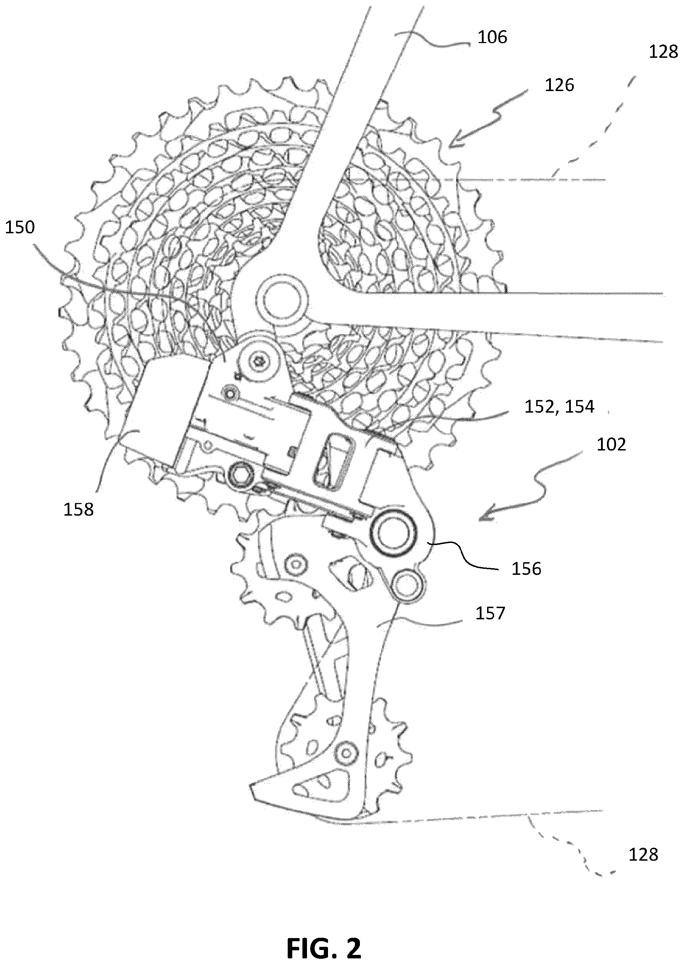

Referring to FIG. 2, the rear derailleur 102 is attached to the bicycle frame 106 and positioned next to the rear cassette 126. The chain 128 is only schematically shown in dashed lines. The electric, or electromechanical, rear derailleur 102 includes a base member 150 (e.g., a "b-knuckle"), an outer link 152, and an inner link 154 (e.g., linkages). The base member 150 is attachable to the bicycle frame 106 in a conventional manner. The inner link 154 is pivotally attached to the base member 150 and the outer link 152 by link pins, for example. A moveable member or assembly 156 (e.g., a "p-knuckle") is pivotally connected to the outer link 152 and the inner link 154 at an end opposite the base member 150 to permit displacement of the moveable assembly 156 relative to the base member 150. A chain guide assembly 157 (e.g., a cage) is configured to engage and maintain tension in the chain 128 and is pivotally connected to a part of the movable assembly 156. The cage 157 may rotate or pivot about a cage rotation axis in a damping direction and a chain tensioning direction.

The rear derailleur 102 may also be configured to work with an integrated power source 158, such as a removable battery. In the examples shown in FIGS. 1 and 2, the integrated power source or battery 158 is attached to the rear derailleur 102. The integrated power source 158 may power, for example, a motor (e.g., a motor module) of the rear derailleur 102 used to shift the rear derailleur 102. The motor module may include a gear mechanism or transmission. As is known in the art, the motor module including the gear mechanism, for example, may be coupled with the linkages 152, 154 to laterally move the cage 157 and thus switch the chain 128 among the sprockets of the rear cassette 126.

As shown in FIG. 1, the bicycle 100 also has a handlebar mounted user interface 164, by way of the shift actuator or electric actuator 148. All of the electric components discussed above and/or other electric components may be connected to the remote power source or remote battery 142. Additionally, all communication between an e-bike central control system or controller, and each of these electric components is achieved through wired or wireless communication. There may be discrete control with individual wires from the central controller to each component, or the system may use a controller area network ("CAN") bus designed to allow microcontrollers and devices to communicate with each other in applications.

While the illustrated bicycle 100 is a mountain bicycle and may include suspension components, such as a shock absorbing front fork, the embodiments disclosed herein may be implemented with other types of bicycles such as, for example, road bicycles. The front and/or forward orientation of the bicycle 100 is indicated by the direction of the arrow "A" in FIG. 1. As such, a forward direction of movement of the bicycle is indicated by the direction of the arrow A.

An e-bike central control system or controller may be supported by a same housing as the remote power source 142. The e-bike controller may control power from the remote power source 142 to components on the bicycle 100 such as, for example, the power assist device 140. The e-bike controller may control power to other and/or different components on the bicycle 100. The e-bike controller may send signals (e.g., instructions) to and/or receive data (e.g., instructions and/or sensor data) from components on the bicycle 100 such as, for example, the derailleur 102, a suspension system, and/or a seat post assembly to actuate and/or control components of the bicycle 100.

In other embodiments, the e-bike controller may be located in other locations (e.g., mounted on the handlebars 108) on the bicycle 100 or, alternatively, may be distributed among various components of the bicycle 100, with routing of a communication link to accommodate necessary signal and power paths. The e-bike controller may also be located off the bicycle 100, such as, for example, on a rider's wrist or in a jersey pocket. The communication link may include wires, may be wireless, or may be a combination thereof. In one example, the e-bike controller may be integrated with the rear derailleur 102 to communicate control commands between components. The e-bike controller may include a processor, a communication device (e.g., a wireless communication device), a memory, and one or more communication interfaces.

In one example, the controller of the derailleur and/or the e-bike controller wirelessly actuates a motor module of the derailleur 102 and/or an assist motor and operates the derailleur 102 for executing gear changes and gear selection. Additionally or alternatively, the controller of the derailleur 102 and/or the e-bike controller may be configured to control gear shifting of a front gear changer.

The bicycle 100 may include one or more sensors. For example, the one or more sensors include a wheel speed sensor 160 that is configured to determine a wheel speed based on sensing a sensing element 162 (e.g., a magnet) positioned on, for example, the rear wheel 114 of the bicycle 100. The one or more sensors may include more and/or different sensors.

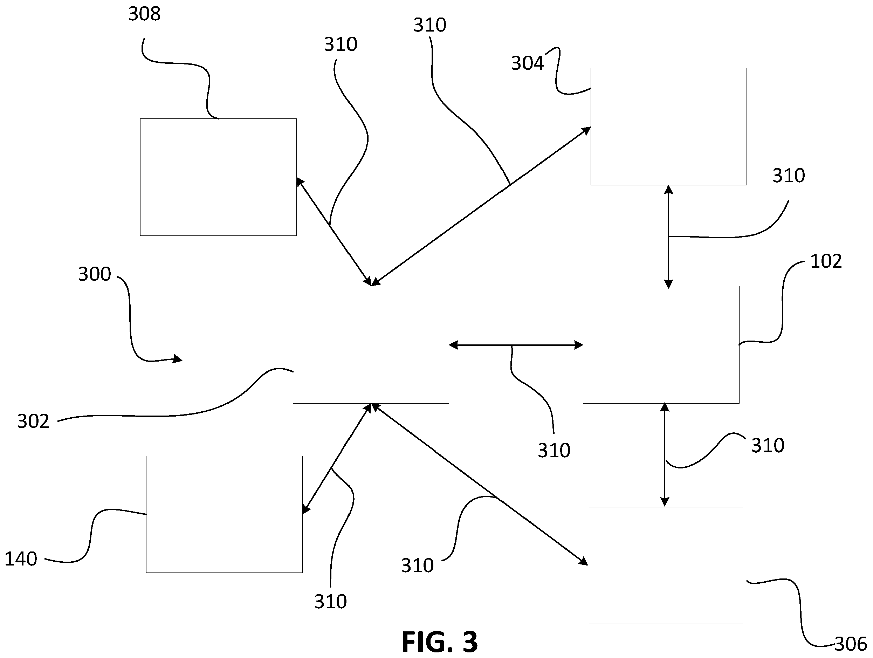

FIG. 3 shows an example of a control system 300 (e.g., an electromechanical control system) for the bicycle 100, for example. The control system 300 includes an e-bike controller 302, the power assist device 140, the rear derailleur 102, and one or more sensors. The power assist device 140 includes, for example, an assist motor.

The one or more sensors include, for example, a pedal speed sensor 304, a wheel speed sensor 306 (e.g., the wheel speed sensor 160), and another sensor 308 (e.g., a torque sensor). For example, the pedal speed sensor 304 measures a rotational speed of at least one of the crank arms 130, and the wheel speed sensor 306 measures a rotational speed of at least one of the wheels 114, 112. In one embodiment, the one or more sensors may include at least two wheel speed sensors 306, one for the front wheel 112 and one for the rear wheel 114.

In one embodiment, the pedal speed sensor 304 and the wheel speed sensor 306 may be a combined speed and cadence sensor. Such a speed and cadence sensor may include a spoke magnet attached to a spoke of the front wheel 112 or the rear wheel 114 and/or a cadence magnet attached to one of the crank arms 130, and a sensor attached to the frame 106 of the bicycle 100 (e.g., a Hall effect sensor). The sensor attached to the frame 106 of the bicycle is configured to identify and count rotations of the one crank arm 130 and/or the front wheel 112 or the rear wheel 114 based on the cadence magnet and/or the spoke magnet passing the sensor attached to the frame 106, respectively.

The control system 300 may include more, fewer, and/or different sensors. For example, the one or more sensors may include a torque sensor that measures a torque on the crank assembly 124 and/or a torque on an output shaft of an assist motor (e.g., the power assist motor 141) of the power assist device 140. Any number of different types of torque sensors may be provided. For example, the torque sensor may include magnetoelastic torque sensors, strain gauges, SAW devices, and/or other types of torque sensors. In one embodiment, the torque sensor is a current sensor that measures current through the assist motor of the power assist device 140. The amount of current consumed by the assist motor of the power assist device 140 is proportional to a torque the assist motor applies to a drivetrain of the bicycle 100.

As shown in the embodiment of FIG. 3, the power assist device 140, the rear derailleur 102, and the one or more sensors (e.g., the pedal speed sensor 304 and the wheel speed sensor 306) may be in direct communication with the e-bike controller 302. Alternatively or additionally, at least some components of the control system 300 may be in indirect communication with the e-bike controller 302. For example, the wheel speed sensor 306 and the pedal speed sensor 304 may be in direct communication with the rear derailleur 102 and indirect communication with the with the e-bike controller 302 via the rear derailleur 102. In one embodiment, each of at least the rear derailleur 102 and the e-bike controller 302 is in direct communication with both the pedal speed sensor 304 and the wheel speed sensor 306, for example. Other and/or different components of the control system 300 may be in direct communication with all sensors of the one or more sensors (e.g., the power assist device 140). Communication between the components of the control system 300 may be wired communication and/or wireless communication.

Each communication link 310 between the components of the control system 300 may be in both directions. In other words, data flow between components of the control system 300 in direct communication may be in both directions. For example, the wheel speed sensor 306 may receive signals from the e-bike controller 302 or the rear derailleur 102 (e.g., as to when to measure the rotational speed) and return the measured rotational speed to the e-bike controller 302 or the rear derailleur 102.

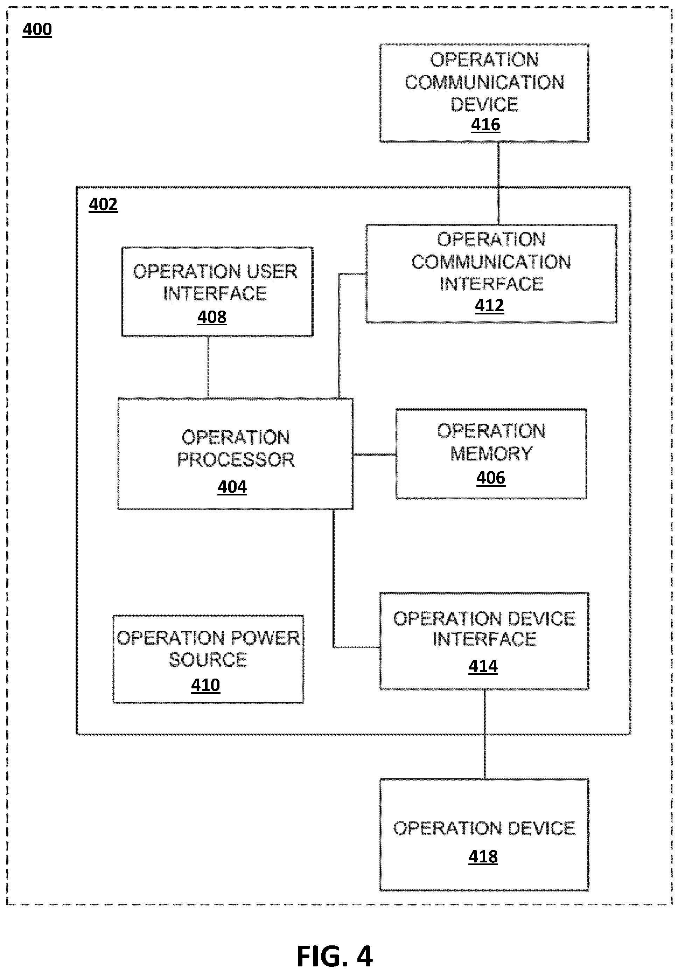

FIG. 4 is a block diagram of an operation component 400. The operation component 400 may be or may be part of one or more of the previously described components such as, for example, the rear derailleur 102, the e-bike controller 302, and a front gear changer. The operation component 400 may also be another component, such as the power assist device 140, an internal gearbox component, a suspension or an adjustable suspension component, or an adjustable seating component. A plurality of operation components 400 may be provided.

The operation component 400 is provided with an operation unit 402, which may be a circuit board or an alternative configuration. The operation unit 402 includes an operation processor 404, an operation memory 406, an operation user interface 408, an operation power source 410, an operation communication interface 412, and an operation device interface 414. In an embodiment, the operation communication interface 412 is in communication with an operation communication device 416. In an embodiment the operation device interface 414 is in communication with an operation device 418. Additional, different, or fewer components may be provided. For example, the operation user interface 408 may be omitted.

The structure, connections, and functions of the operation processor 404 may be representative of those of the rear derailleur 102, the front derailleur, the e-bike controller 302, or another component. The operation processor 404 may include a general processor, digital signal processor, an ASIC, FPGA, analog circuit, digital circuit, combinations thereof, or other now known or later developed processor. The operation processor 404 may be a single device or combinations of devices, such as through shared or parallel processing.

The operation memory 406 may be a volatile memory or a non-volatile memory. The operation memory 406 may include one or more of a ROM, a RAM, a flash memory, an EEPROM, or other type of memory. The operation memory 406 may be removable from the operation component 400, such as an SD memory card. In a particular non-limiting, exemplary embodiment, a computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device. Accordingly, the disclosure is considered to include any one or more of a computer-readable medium and other equivalents and successor media, in which data or instructions may be stored.

The operation memory 406 is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding, or carrying a set of instructions for execution by a processor or that cause a computer system to perform any one or more of the methods or operations disclosed herein.

The operation power source 410 is a portable power source, which may be stored internal to the operation component 400 or stored external to the operation component 400 and communicated to the operation component through a power conductive cable. The operation power source 410 may involve the generation of electric power, for example using a mechanical power generator, a fuel cell device, photo-voltaic cells, piezoelectric, or other power-generating devices. The operation power source 410 may include a battery such as a device consisting of two or more electrochemical cells that convert stored chemical energy into electrical energy. The operation power source 410 may include a combination of multiple batteries or other power providing devices. Specially fitted or configured battery types, or standard battery types may be used.

In the example where the operation component 400 is the rear derailleur 102, the operation power source 410 may be stored internal to the operational component 400. In the example where the operation component 400 is the e-bike controller 302, the operation power source 410 may be stored internal or external to the operation component 400. For example, the e-bike controller 302 may be supported within a housing of the remote power source 142 of FIG. 1.

The operation device interface 414 provides for operation of a component of the bicycle 100. For example, the operation device interface 414 may transmit power from the operation power source 410 to generate movement in the operation device 418. In various embodiments, the operation device interface 414 sends power to control movement of the power assist device 140, a motor of the rear derailleur 102, a motor of the front derailleur, or any combination thereof. In one embodiment, the operation component 400 is the e-bike controller 302, and the operation device interface 414 sends power to control movement of the power assist device 140. The operation device interface 414 includes wired conductive signals and/or data communication circuitry operable to control the operation device 418.

The operation user interface 408 may be one or more buttons, keypad, keyboard, mouse, stylus pen, trackball, rocker switch, touch pad, voice recognition circuit, or other device or component for communicating data between a user and the operation component 400. The operation user interface 408 may be a touch screen, which may be capacitive or resistive. The operation user interface 408 may include an LCD panel, LED, LED screen, TFT screen, or another type of display. The operation user interface 408 may also include audio capabilities or speakers.

The operation communication interface 412 is configured to receive, with the operation communication device 416, data such as measurement data (e.g., rotational crank speed, rotational wheel speed, bicycle speed, and/or torque), anticipation signals, operation signals, and/or other signals from bicycle components (e.g., the pedal speed sensor 304, the wheel speed sensor 306, the torque sensor, and/or the e-bike controller 302). In one embodiment, the operation component 400 includes more than one operation communication interface 412 in communication with more than one operation communication device 416, respectively. The operation communication interface 412 may also be configured to send data such as status signals (e.g., temperature sensor signals) for reception by, for example, the e-bike controller 302. The operation communication interface 412 communicates the data using any operable connection. An operable connection may be one in which signals, physical communications, and/or logical communications may be sent and/or received. An operable connection may include a physical interface, an electrical interface, and/or a data interface. One or more operation communication interfaces may provide for wireless communications through the operation communication device 416 in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as components of the control system 300 (e.g., the e-bike controller 302 and the rear derailleur 102), and/or other components on the bicycle 100 and/or worn by the user. Further, a non-limiting embodiment, implementations may include distributed processing, component/object distributed processing, and parallel processing. Alternatively, virtual computer system processing may be constructed to implement one or more of the methods or functionalities as described herein.

A computer program (also known as a program, software, software application, script, or code) may be written in any form of programming language, including compiled or interpreted languages, and the computer program may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and the apparatus may also be implemented as, special purpose logic circuitry (e.g., an FPGA or an ASIC).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server, a cellular network device, or other network device.

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data (e.g., magnetic, magneto optical disks, or optical disks). However, a computer need not have such devices. Moreover, a computer may be embedded in another device such as, for example, a mobile telephone, a personal digital assistant ("PDA"), a mobile audio player, a Global Positioning System ("GPS") receiver, a control unit, a rear derailleur, or a front gear changer, to name just a few. Computer readable media suitable for storing computer program instructions and data include all forms of non-volatile memory, media, and memory devices, including by way of example: semiconductor memory devices (e.g., EPROM, EEPROM, and flash memory devices); magnetic disks (e.g., internal hard disks or removable disks); magneto optical disks; and CD-ROM and DVD-ROM disks. The processor and the memory may be supplemented by, or incorporated in, special purpose logic circuitry.

The operation communication device 416 provides for data and/or signal communication from the operation component 400 to another component of the bicycle 100, or an external device such as a mobile phone or other computing device. The operation communication device communicates the data using any operable connection. An operable connection may be one in which signals, physical communications, and/or logical communications may be sent and/or received. An operable connection may include a physical interface, an electrical interface, and/or a data interface. The control communication device may be configured to communicate wirelessly, and as such include one or more antennae. The control communication device provides for wireless communications in any now known or later developed format.

A control antenna may also be provided. The control antenna may be a plurality of control antennae. The operation component 400 may include an antenna with circuitry of a PCB of the operation component 400; however, additional antennae may also be included in the circuitry. The control antenna may be integrated with another component of the bicycle 100 or may be an independent component. For example, the control antenna may be integrated as part of the e-bike controller 302 and/or as part of the rear derailleur 102.

The derailleur 102 may allow configuration of a number of ride modes that may be switched between by a control unit (e.g., the e-bike controller 302 or another controller on or outside of the bicycle 100). The control unit may switch the ride mode based on user input (e.g., via the electric actuator 148 or another interface) or automatically based on sensed conditions. In each mode, various characteristics of the ride mode may be adjusted. For example, gear hysteresis, minimum gear to shift to without pedaling, and/or other characteristics may be adjusted.

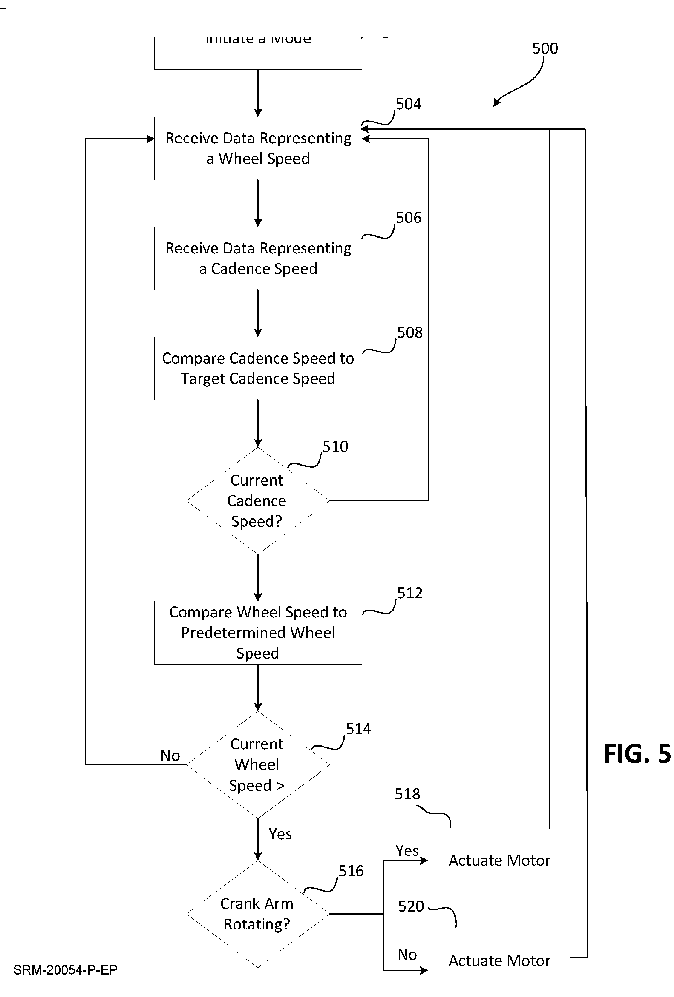

FIG. 5 is a flowchart of an embodiment of a method 500 for electromechanical control of components of the bicycle 100, for example. The method 500 includes a first embodiment of a mechanism for identifying a wheel event (e.g., wheel slipping and/or wheel lock). The flowchart also illustrates a method for transmitting and receiving wireless signals on the bicycle 100. As presented in the following sections, the acts may be performed using any combination of the components indicated in previous figures. For example, the following acts may be performed by at least some components of the control system 300, as well as additional or other components. In an embodiment, the acts may be performed by, for example, the rear derailleur 102, the e-bike controller 302, the power assist device 140, the one or more sensors, or any combination thereof. Additional, different, or fewer acts may be provided. The acts are performed in the order shown or in other orders. One or more of the acts may be repeated.

In act 502, a processor initiates a mode (e.g., a full automatic mode) for a bicycle. In the full automatic mode, a derailleur (e.g., the derailleur 102) is shifted without user input to maintain a gear that results in a rider cadence close to a defined target based on a current wheel speed. The processor may initiate the full automatic mode based on user input or automatically based on sensed riding conditions. In one embodiment, the processor is a processor of the derailleur and initiates the full automatic mode based on instructions from another processor that received the user input or identified the sensed riding conditions (e.g., the e-bike controller 302).

In act 504, the processor receives data representing a wheel speed from a sensor (e.g., a wheel speed sensor such as the wheel speed sensor 306). The wheel speed sensor measures rotational speed of a wheel continuously or at an interval (e.g., a variable interval based on the rotational speed of the wheel). The received data representing the wheel speed may be for a front wheel of the bicycle and/or a rear wheel of the bicycle. The data representing the wheel speed may be a rotational speed value (e.g., in revolutions per minute (RPM)).

In act 506, the processor receives data representing a cadence speed from a sensor (e.g., a pedal speed sensor or crank cadence sensor; the pedal speed sensor 304). The pedal speed sensor measures a rotational speed of a crank arm, to which a pedal of the bicycle is attached, continuously or at an interval (e.g., a variable interval based on the rotational speed of the crank arm). The data representing the cadence speed may be a rotational speed value (e.g., in RPM).

In act 508, the processor compares the data representing the cadence speed (e.g., current cadence speed) received in act 506 to a target cadence speed. The target cadence speed may be user defined. For example, the bicycle may include one or more control devices (e.g., two control buttons) mounted on the handlebars of the bicycle. The two control buttons may be in communication (e.g., wireless communication and/or wired communication) with, for example, a controller (e.g., the e-bike controller 302) and/or other components on the bicycle. One of the two control buttons may generate a signal instructing an increase in the target cadence speed when pressed, and the other of the two control buttons may generate a signal instructing a decrease in the target cadence speed when pressed. A single press of either of the two control buttons, for example, increments or decrements the target cadence speed (e.g., a setpoint) by a configurable number of RPM. In one embodiment, the setpoint is adjustable within functionally practical predetermined bounds (e.g., 60 RPMs - 120 RPMs).

In one embodiment, shifter buttons that control the rear derailleur upshift and downshift actions may be dual purposed to control the setpoint of the automatic shifting target cadence. The upshift and downshift buttons may trigger the upshift and downshift actions of the rear derailleur, respectively, if the shifter button is pressed for less than a predetermined amount of time (e.g., less than 300 milliseconds). If a shifter button is pressed and held for longer than the predetermined amount of time (e.g., a long press), the long press may be considered a setpoint adjustment command and may increment or decrement the target cadence.

Each setpoint adjustment may only modify the target cadence by a small amount (e.g., 1 RPM) to achieve a precise adjustment. In one embodiment, in order to make a large adjustment to the target cadence quickly, a long press may be followed by one or more shorter presses (e.g., less than 300 milliseconds). As long as each shorter press occurs within some threshold time after the previous press (e.g., 800 milliseconds), the shorter presses may each cause an additional increment or decrement to the setpoint.

A memory in communication with the processor (e.g., a memory of the derailleur 102 or a memory of the e-bike controller 302) stores a gear ratio table and upshift/downshift tables. When the setpoint is adjusted by the rider, the processor recalculates the gear ratio table and the upshift/downshift tables based on the adjusted setpoint. If a closest gear ratio changes at the time of the setpoint adjustment, the derailleur immediately shifts, ignoring hysteresis built into the upshift/downshift tables.

In one embodiment, the setpoint adjustment is configured through a system control interface (e.g., an e-bike system control interface). The system control interface may be capable of displaying a current setpoint and directly adjusting the setpoint on the rear derailleur. In another embodiment, the setpoint adjustment is executed via a mobile device application in direct communication with the rear derailleur.

In act 510, the processor determines whether the current cadence speed received in act 506 is within a range (e.g., within 3 RPMs) relative to the target cadence speed based on the comparison of act 506. If the current cadence speed is within the range, the method returns to act 504. If the current cadence speed is outside of the range, the method moves to act 512.

In act 512, the processor compares the current wheel speed to a predetermined minimum wheel speed. For example, the processor calculates a difference between the current wheel speed and the predetermined minimum wheel speed. The predetermined minimum wheel speed represents, for example, a functional minimum rotational wheel speed.

In act 514, the processor determines whether the current wheel speed is greater than or less than the predetermined minimum wheel speed based on the comparison in act 512. If the processor determines the current wheel speed is less than the predetermined minimum wheel speed, a shift is not initiated, and the method returns to act 504. If the processor determines the current wheel speed is greater than the predetermined minimum wheel speed, the method moves to act 516.

In act 516, the processor determines whether the crank arm is rotating. For example, the processor determines whether the crank arm is rotating based on the current cadence speed received at act 506. If the current cadence speed is greater than zero, the method moves to act 518. If the current cadence speed is equal to zero or approximately zero (e.g., less than or equal to 1 RPMs), the method moves to act 520.

In act 518, the processor instructs a motor (e.g., a motor of the derailleur or the power assist device 140) to actuate and shift to maintain a gear that results in a rider cadence close to (e.g., within the range discussed above) the target cadence speed identified in act 508. After act 518, the method returns to act 504.

When performing automatic shifts, the derailleur may adjust a minimum timing between shifts based on current wheel speed, current cog, current rider cadence, or some other parameter to provide that each shift is completed before a next shift is attempted. This timing is optimized to allow shifting as fast as possible without inducing a shift failure.

In act 520, the processor instructs, for example, the assist motor to run for a period of time to allow the chain to derail to a target cog (e.g., with the motor of the derailleur). After act 520, the method returns to act 504.

A sensor (e.g., the wheel speed sensor 306) sensing a slipping wheel (e.g., the rear wheel 114) will report wrong speed information to the full automatic mode initiated in act 502 (e.g., executing an automatic shifting algorithm), for example, resulting in unwanted gear shifts. With the slipping wheel, the sensor sends, and the automatic shifting algorithm receives, speed information that is higher than an actual speed of the bicycle (e.g., the bicycle 100), causing a higher gear-ratio to be selected. On an electric bicycle with additional motor-assist (e.g., the bicycle 100), with a slipping wheel, a power assist motor (e.g., the power assist motor 141) will further increase a speed of the wheel (e.g., the rear wheel 114) due to higher gear-ratio. This will result in even more automatic shifting shift events to higher gear-indices. This situation may end in an avalanche effect of gear-shifting, resulting in a safety critical situation causing harm to the rider. This malfunction may be avoided by a mechanism that detects the slipping wheel and disables automatic shifting when the slipping wheel is detected.

In a riding scenario where a wheel (e.g., the rear wheel 114) is slipping, the negative effect of the wheel slipping may be made worse by the power assist motor applying additional power to a drive train (e.g., the drive train 122) of the bicycle (e.g., the bicycle 100). This scenario may result in a safety critical situation where the rider crashes and gets injured. This hazardous ride situation may be avoided by a mechanism that detects the slipping wheel and reduces the additional power applied by the power assist motor in this scenario.

A sensor (e.g., the wheel speed sensor 306) sensing a locked wheel (e.g., the rear wheel 114) will also report wrong speed information to the full automatic mode (e.g., the automatic shifting algorithm) initiated in act 502, for example, resulting in unwanted gear shifts to a smallest gear ratio. With the locked wheel, the sensor sends, and the automatic shifting algorithm receives, speed information representing a speed of 0 kph, causing shifting to the smallest gear ratio. This is not what the rider wants, as the rider expects the bicycle not to shift gears when the wheel is locked over a short period of time. This malfunction may be avoided by a mechanism that detects the locked wheel and disables the automatic shifting algorithm when the locked wheel is detected.

Electric bicycles (e.g., the bicycle 100) may derive wheel speed information from a speed sensor detecting speed of, for example, a rear wheel of the bicycle (e.g., the rear wheel 114). Speed-information is derived by measuring a time period between impulses detected by the sensor. These impulses are generated each time part of the rotating wheel (e.g., a magnet 162 attached to the rear wheel 114) passes the sensor. A number of magnets may be attached to and distributed around the real wheel, for example, such that the sensor detects a number of impulses per wheel rotation. A higher number of impulses per wheel rotation increases accuracy of the derived wheel speed information. With a known number of impulses per wheel rotation (e.g., a number of magnets attached to the rear wheel) and a known wheel diameter, the measured time period between impulses may be used to determine a wheel rotation frequency or wheel speed. Wheel acceleration may be determined based on the determined wheel speed, and the determined wheel acceleration may then be used to identify wheel slip or wheel lock.

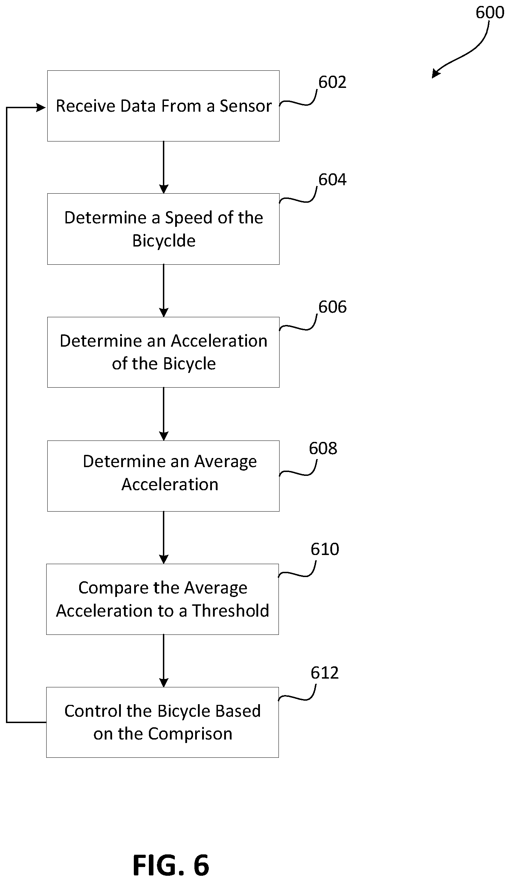

FIG. 6 is a flowchart of an embodiment of a method 600 for electromechanical control of components of a bicycle (e.g., the bicycle 100). The flowchart also illustrates a method for transmitting and receiving wireless signals on the bicycle. As presented in the following sections, the acts may be performed using any combination of the components indicated in previous figures. For example, the following acts may be performed by at least some components of the control system 300, as well as additional or other components. In an embodiment, the acts may be performed by, for example, the rear derailleur 102, the e-bike controller 302, the power assist device 140, the one or more sensors, or any combination thereof. Additional, different, or fewer acts may be provided. The acts are performed in the order shown or in other orders. The acts may be repeated.

In act 602, a processor receives data from a sensor of the bicycle. The processor may be a processor of any number of different components of the bicycle including, for example, a rear derailleur (e.g., the rear derailleur 102), a controller of the bicycle (e.g., the e-bike controller 302), or a combination thereof. The sensor may be a wheel speed sensor (e.g., the wheel speed sensor 306) such as, for example, a reed switch or a Hall effect sensor mounted to a frame of the bicycle. The sensor may be mounted on or in any number of different parts of the bicycle including, for example, on a chain stay of the frame, at a fork end (e.g., a dropout) of the frame, or in a drive unit (e.g., the power assist device 140) of the bicycle.

The sensor may be configured to sense at least one sensed element disposed about, for example, a bicycle wheel (e.g., a front wheel such as the front wheel 112 and/or a rear wheel such as the rear wheel 114) of the bicycle as the at least one sensed element rotates through a proximal region of the sensor. The proximal region of the sensor may be a region in which a sensed element is detectable by the sensor.

The at least one sensed element includes one or more magnets attached to the bicycle wheel. In one embodiment, the at least one sensed element includes a single magnet attached to the bicycle wheel at a radial position of the bicycle wheel that passes through the proximal region of the sensor (e.g., such that the single magnet is centered relative to the sensor when the single magnet rotates past the sensor with the bicycle wheel). In another embodiment, the at least one sensed element includes two or more magnets attached to the bicycle wheel, such that the two or more magnets are equally spaced circumferentially. The two or more magnets may be attached to the bicycle wheel at radial positions of the bicycle wheel that pass through the proximal region of the sensor, respectively.

The sensor generates a signal (e.g., a pulse; an output voltage such as a Hall voltage) each time the sensor detects a magnetic flux density around the sensor (e.g., within the proximal region) above a predetermined threshold. In other words, the signal generated by the sensor identifies receipt of a magnetic field pulse by the sensor. The predetermined threshold is set, such that each time a magnet on the bicycle wheel passes through the proximal region of the sensor, the magnetic flux density of the magnet, which is detected by the sensor, causes the sensor to generate the signal.

Each time the sensor generates, for example, an output voltage (e.g., a wheel speed event), the sensor may transmit the respective output voltage and/or a data point of the data identifying when the respective output voltage was generated by the sensor to the processor. Alternatively or additionally, the processor may monitor or sample the sensor, and identify when the respective output voltage was generated by the sensor. For example, the processor may generate a data point of the data identifying when (e.g., via a clock of the e-bike controller 302) the respective output voltage was generated by the sensor.

As an example, after three wheel speed events (e.g., after the bicycle begins to move from a stationary position), the data includes a first data point, a second data point, and a third data point that identify receipt of magnetic field pulses by the sensor at a first time point, a second time point, and a third time point, respectively. The second time point is after the first time point, and the third time point is after the second time point. A memory (e.g., of the e-bike controller 302) in communication with the processor may store the data (e.g., as times at which wheel speed events occur) as the sensor generates output voltages with identified wheel speed events (e.g., the at least one magnet rotating through the proximal region of the sensor). The processor may identify a respective subset of the data (e.g., initially including the first data point and the second data point representing the first time point and the second time point at which a first output voltage and a second output voltage were generated by the sensor, respectively) for wheel speed calculations with each newly identified wheel speed event.

In act 604, the processor determines a speed of the bicycle (e.g., a wheel speed of the bicycle) based on a subset of the received data of act 602. For example, the processor determines a first speed of the bicycle based on the first data point (e.g., the first time point corresponding to the first wheel speed event) and the second data point (e.g., the second time point corresponding to the second wheel speed event) of the received data of act 602.

The memory may store a size of the bicycle wheel. The stored size of the bicycle wheel may be, for example, a circumferential distance of the bicycle wheel (e.g., the rear wheel 114) between wheel speed events (e.g., wheel circumference per magnet). For example, in the embodiment in which the single magnet is attached to the bicycle wheel, the memory may store a circumference of the bicycle wheel. In the embodiment in which two or more magnets are attached to the bicycle wheel, the memory may store a portion of the circumference of the bicycle wheel corresponding to the number of magnets attached to the bicycle wheel (e.g., one half of the circumference for the embodiment in which two magnets are attached to the bicycle wheel; one third of the circumference for the embodiment in which three magnets are attached to the bicycle wheel). The circumferential distance stored in the memory represents a distance the bicycle travels between wheel speed events.

The processor may determine a time period between two most recent wheel speed events (e.g., the first wheel speed event and the second wheel speed event corresponding to the first data point and the second data point of the received data, respectively). For example, the processor may determine a time period (e.g., an elapsed time) between the first time point and the second time point. The processor may determine the speed of the bicycle based on the circumferential distance stored in the memory and the determined time period between the two wheel speed events. For example, the processor may calculate the speed of the bicycle by dividing the circumferential distance stored in the memory by the determined time period between the two wheel speed events.

The memory or another memory in communication with the processor (e.g., the memory) may store the determined speed of the bicycle as a sample within a sample buffer (e.g., a first sample buffer). The memory may store the determined speed of the bicycle according to a high resolution first in first out (FIFO) method, which is discussed further below. The first sample buffer may be any number of sizes. In other words, the first sample buffer may store any number of samples (e.g., 32, 64, or 128). The determined speed may be determined for and correspond to an associated time point, and may be stored within the sample buffer with the associated time point. For example, the speed of the bicycle determined in act 604 may correspond to a later time point (e.g., the second time point) of the two time points used to determine the speed of the bicycle (e.g., the first time point and the second time point). Alternatively, the corresponding time point may be between the two time points used to the determine the speed of the bicycle (e.g., midway between the first time point and the second time point; the first time point plus half of the determined time period).

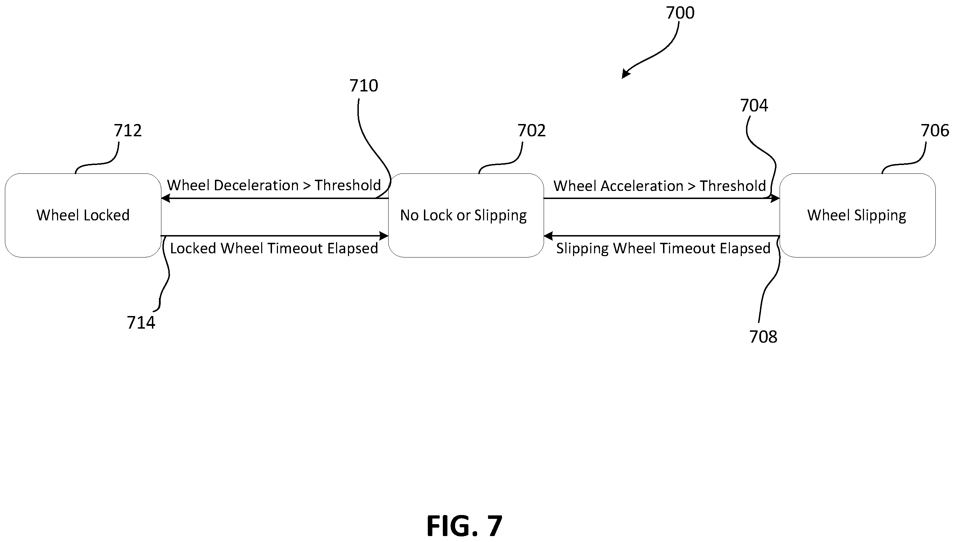

Before the first sample buffer is full (e.g., all samples of the first sample buffer include a determined speed of the bicycle), the determined speed (e.g., the first speed) is stored in the first sample buffer without replacement of any previously stored samples (e.g., determined speeds) in the first sample buffer. For example, referring to FIG. 7, the first speed determined in act 604 is stored as a sample (see FIG. 7) within the first sample buffer. When the first speed determined in act 604 is stored as the sample n within the first sample buffer, for example, the other samples may have a value of 0.

In one embodiment, acts 602 and 604 may be repeated at least once before the remainder of the method 600 is performed. In another embodiment, acts 602 and 604 may be repeated a number of times until the first sample buffer is full, before the remainder of the method 600 is performed.

In act 606, the processor determines an acceleration (e.g., a most recently determined acceleration) of the bicycle based on the speed of the bicycle determined in act 604. For example, the processor determines the acceleration of the bicycle based on the speed of the bicycle determined and stored as, for example, sample n (see FIG. 7) in act 604 and a speed of the bicycle determined immediately prior to the determination in act 604 (e.g., a bicycle speed stored in the first sample buffer as sample n-1 in FIG. 7).

The processor may determine the acceleration of the bicycle (e.g., a first acceleration) based on the following equation, with reference to FIG. 7: $acc \left(n\right) = \frac{v \left(n\right) - v \left(n-1\right)}{Δ t}$ In other words, the first acceleration, acc(n), is equal to a difference between the speed of the bicycle stored as the sample n (e.g., the first speed) within the first sample buffer and the speed of the bicycle stored as the sample n-1 within the first sample buffer, divided by an elapsed time (e.g., a time period) between the two samples (e.g., sample n and sample n-1 within the first sample buffer).

The memory or another memory in communication with the processor (e.g., the memory) may store the determined first acceleration of the bicycle as a sample within a sample buffer (e.g., a second sample buffer). As with the first sample buffer, for example, the memory may store the determined first acceleration of the bicycle according to a high resolution first in first out (FIFO) method.

Before the second sample buffer is full (e.g., all samples of the second sample buffer include a determined acceleration of the bicycle), the determined first acceleration, for example, is stored in the second sample buffer without replacement of any previously stored samples (e.g., determined accelerations) in the second sample buffer. For example, similar to the sample buffer of FIG. 7, the first acceleration determined in act 606 is stored as a sample (e.g., sample n) within the second sample buffer. When the first acceleration determined in act 606 is stored as the sample n within the second sample buffer, for example, the other samples may have a value of 0.

The second sample buffer may be any number of sizes. In other words, the second sample buffer may store any number of samples (e.g., 32, 64, or 128). The determined first acceleration may be determined for and correspond to an associated time point, and may be stored within the second sample buffer with the associated time point. For example, the first acceleration of the bicycle may correspond to a time point associated with a most recently determined speed of the bicycle in act 604 (e.g., the second time point). Alternatively, the corresponding time point may be between the two time points associated with the determined speeds, respectively, of the bicycle used to determine the acceleration of the bicycle.

In act 608, the processor may determine an average acceleration of the bicycle. For example, the processor may determine the average acceleration of the bicycle based on a subset (e.g., all or less than all) of the samples stored in the second sample buffer. The subset of the samples may be a predetermined number of samples (e.g., 32 samples) of the second sample buffer. The predetermined number of samples may a predetermined number of the most recently determined accelerations stored as samples may be within the second sample buffer, including, for example, the first acceleration determined and stored as sample n in act 606. By averaging the subset of the samples stored in the second sample buffer (e.g., acceleration samples) over a number of samples (N), system inaccuracy effects may be compensated for by the cost of responsiveness.

In one embodiment, a size of (e.g., a number of samples within) the subset of the samples for the averaging is variable and represents a predetermined time period (e.g., one second). For example, the time period between samples (e.g., determined speeds) stored in the first sample buffer changes with the speed of the bicycle, and thus, the time period between samples (e.g., accelerations) stored in the second sample buffer also changes with the speed of the bicycle. The number of stored samples in the second sample buffer covering the predetermined time period may thus also change with the speed of the bicycle.

In one embodiment, the average acceleration is not determined in act 608 until the second sample buffer is full. In other words, the acts 602-606 are repeated until the second sample buffer is full, and then, the method 600 moves to act 608, in which the average acceleration is determined. In another embodiment, the average acceleration is not determined in act 608 until the subset of the samples (e.g., corresponding to the predetermined number of samples) of the second sample buffer has been filled with determined accelerations. In other words, the acts 602-606 are repeated until the subset of the samples of the second sample buffer is full, and then, the method 600 moves to act 608, in which the average acceleration is determined.

In act 610, the processor compares the average acceleration determined in act 608 to one or more predetermined threshold accelerations (e.g., a predetermined threshold acceleration). The predetermined threshold acceleration may be stored in the memory or another memory in communication with the memory. The predetermined threshold acceleration (e.g., a first predetermined threshold acceleration) may be or may be based on a maximum acceleration a rider may achieve on the bicycle (e.g., the bicycle 100, an electric bicycle). The processor may compare the average acceleration determined in act 608 to the first predetermined threshold acceleration in that the processor may determine whether the average acceleration determined in act 608 is greater than the first predetermined threshold acceleration. In one embodiment, the processor determines whether the average acceleration determined in act 608 is greater than or equal to the first predetermined threshold acceleration.

Alternatively, the predetermined threshold acceleration (e.g., a second predetermined threshold acceleration) may be or may be based on a minimum acceleration (e.g., a maximum deceleration) a rider may achieve on the bicycle. The processor may compare the average acceleration determined in act 608 to the second predetermined threshold acceleration, for example, in that the processor may determine whether the average acceleration determined in act 608 is less than the second predetermined threshold acceleration. In one embodiment, the processor determines whether the average acceleration determined in act 608 is less than or equal to the second predetermined threshold acceleration.

In one embodiment, the processor compares the average acceleration determined in act 608 to both the first predetermined threshold acceleration and the second predetermined threshold acceleration. For example, the processor determines whether the average acceleration determined in act 608 is greater than the first predetermined threshold acceleration and whether the average acceleration determined in act 608 is less than the second predetermined threshold acceleration.

The maximum acceleration and/or the minimum acceleration, for example, may be determined experimentally and stored as the first predetermined threshold acceleration and/or the second predetermined threshold acceleration, respectively, in the memory, for example, at manufacturing or prior to sale of the bicycle. In one embodiment, the first predetermined threshold acceleration and/or the second predetermined threshold acceleration may be changed within the memory by, for example, the rider.

In act 612, the processor may control the bicycle (e.g., a component of the bicycle) based on the comparison(s) in act 610. For example, the processor may control an assist motor (e.g., the assist motor 141) and/or a derailleur (e.g., the rear derailleur 102) of the bicycle based on the comparison(s) in act 608.

When, based on the comparison(s) in act 610, the processor determines the average acceleration of the bicycle determined in act 608 is greater than the first predetermined threshold acceleration, the processor identifies wheel slip of a wheel (e.g., the rear wheel 114) of the bicycle (e.g., the bicycle 100). When the processor identifies, based on the comparison of act 610, the wheel slip, the processor may control a power assist motor (e.g., the power assist motor 141) of the bicycle. The control of the power assist motor of the bicycle by the processor may include reduction of a power (e.g., an output power) of the power assist motor. The power of the power assist motor may be reduced to, for example, zero, though other reductions may be provided (e.g., 80% reduction of output power or 90% reduction of output power). In one embodiment, the processor is configured to prevent or stop the power assist motor of the bicycle from providing power to a drive train (e.g., the drive train 122) of the bicycle.

In one embodiment, the reduction of the power of the power assist motor as the control of the bicycle in act 612 may be for a predetermined time period. For example, the processor may reduce the power of the power assist motor for any number of different predetermined time periods including, for example, 30 seconds, one minute, or two minutes. The predetermined time period may be a shorter amount of time or a longer period of time. Once the predetermined time period has elapsed, power assist from the power assist motor may resume (e.g., according to a power assist control method).

In one embodiment, when the processor identifies, based on the comparison of act 610, the wheel slip, the processor may, alternatively or additionally, control a derailleur (e.g., the rear derailleur 102) of the bicycle. For example, the processor may pause (e.g., deactivate) an automatic shifting control method (e.g., the full automatic mode of FIG. 5).

In one embodiment, the deactivation of the automatic shifting control method, for example, may be for a predetermined time period. For example, the processor may deactivate the automatic shifting control method for any number of different predetermined time periods including, for example, 30 seconds, one minute, or two minutes. The predetermined time period may be a shorter amount of time or a longer period of time. Once the predetermined time period has elapsed, automatic shifting may resume (e.g., according to the full automatic mode of FIG. 5).

In one embodiment, the processor may reduce the power assist from the power assist motor for a same predetermined time period as the automatic shifting control method is deactivated. In another embodiment, the processor reduces the power assist from the power assist motor and deactivates the automatic shifting control method for different predetermined time period, respectively. In other words, the power assist is reduced for a longer or shorter amount of time compared to an amount of time the automatic shifting is deactivated.

When, based on the comparison(s) in act 610, the processor determines the average acceleration of the bicycle determined in act 608 is less than the second predetermined threshold acceleration, the processor identifies wheel lock of a wheel (e.g., the rear wheel 114) of the bicycle (e.g., the bicycle 100). When the processor identifies, based on the comparison of act 610, the wheel lock, the processor may control a derailleur (e.g., the rear derailleur 102) of the bicycle. For example, the processor may pause (e.g., deactivate) the automatic shifting control method (e.g., the full automatic mode of FIG. 5).

In one embodiment, the deactivation of the automatic shifting control method, for example may be for a predetermined time period. For example, the processor may deactivate the automatic shifting control method for any number of different predetermined time periods including, for example, 30 seconds, one minute, or two minutes. The predetermined time period may be a shorter amount of time or a longer period of time. Once the predetermined time period has elapsed, automatic shifting may resume (e.g., according to the full automatic mode of FIG. 5).

In one embodiment, when the processor identifies, based on the comparison(s) in act 610, the wheel lock, the processor may, alternatively or additionally, control the power assist motor (e.g., the power assist motor 141) of the bicycle. The control of the power assist motor of the bicycle by the processor may include reduction of, for example, the output power of the power assist motor. The power of the power assist motor may be reduced to, for example, zero, though other reductions may be provided (e.g., 80% reduction of output power or 90% reduction of output power). In one embodiment, the processor is configured to prevent or stop the power assist motor of the bicycle from providing power to the drive train of the bicycle.

In one embodiment, the reduction of the power of the power assist motor may be for a predetermined time period. For example, the processor may reduce the power of the power assist motor for any number of different predetermined time periods including, for example, 30 seconds, one minute, or two minutes. The predetermined time period may be a shorter amount of time or a longer period of time. Once the predetermined time period has elapsed, power assist from the power assist motor may resume (e.g., according to a power assist control method).

In one embodiment, the processor may reduce the power assist from the power assist motor for a same predetermined time period as the automatic shifting control method is deactivated. In another embodiment, the processor reduces the power assist from the power assist motor and deactivates the automatic shifting control method for different predetermined time periods, respectively. In other words, the power assist is reduced for a longer or shorter amount of time compared to an amount of time the automatic shifting is deactivated.

FIG. 7 is a flowchart of one embodiment of a method 700 for identifying a wheel event on a bicycle. A full automatic mode (e.g., according to the method 500 of FIG. 5) may be executed in act 702 when no wheel event is identified (e.g., wheel slipping and wheel lock are not identified). During the full automatic mode, for example, an average acceleration of the bicycle (e.g., a wheel acceleration or a wheel deceleration) determined according to a method for electromechanical control of components of the bicycle (e.g., the method 600) is compared to one or more acceleration thresholds (e.g., an acceleration threshold and a deceleration threshold). When, based on the comparison, the wheel acceleration is greater than the acceleration threshold (see arrow 704), wheel slipping is identified in act 706. After wheel slipping is identified, one or more components of the bicycle are controlled based on the identified wheel slipping. For example, automatic shifting of the bicycle (e.g., as part of the full automatic mode) and/or power assist from a power assist motor of the bicycle is paused for a predetermined amount of time (e.g., a slipping wheel timeout; see arrow 708). Once the slipping wheel timeout has elapsed, the full automatic mode may resume in act 702. In one embodiment, power assist from the power assist motor may again be allowed after the slipping wheel timeout or after another period of time.

When, based on the comparison, the wheel deceleration, for example, is greater than the deceleration threshold (see arrow 710), wheel lock is identified in act 712. After wheel lock is identified, one or more components of the bicycle are controlled based on the identified wheel lock. For example, automatic shifting of the bicycle (e.g., as part of the full automatic mode) and/or power assist from the power assist motor of the bicycle is paused or deactivated for a predetermined amount of time (e.g., a locked wheel timeout; see arrow 714). Once the locked wheel timeout has elapsed, the full automatic mode may resume in act 702. In one embodiment, power assist from the power assist motor may again be allowed after the locked wheel timeout or after another period of time.

Referring to FIG. 6, after act 612, the method 600 returns to act 602, and the method 600 is repeated. The processor receives a new data point (e.g., a next data point; the third data point) of the data from the sensor of the bicycle (e.g., identifying a new wheel speed event). In repeated act 604, the processor determines a new speed (e.g., a second speed) of the bicycle based on a new subset of the received data. For example, the processor determines the second speed of the bicycle based on the second data point (e.g., the second time point corresponding to the second wheel speed event) and the third data point (e.g., a third time point corresponding to the third wheel speed event). The determined second speed of the bicycle is stored in the memory (e.g., within the first sample buffer of the memory), as will be described further below. In repeated act 606, the processor determines a new acceleration of the bicycle (e.g., a second acceleration) based on the most recently determined speed of the bicycle (e.g., the second speed) and the speed determined immediately before the most recently determined speed of the bicycle (e.g., the first speed). The determined second acceleration of the bicycle is stored in the memory (e.g., within the second sample buffer of the memory). In repeated act 608, the processor determines a new average acceleration of the bicycle based on the new acceleration of the bicycle determined in repeated act 606. In repeated act 610, the new average acceleration determined in repeated act 608 is compared to the first predetermined threshold acceleration and/or the second predetermined threshold acceleration, and in repeated act 612, the processor controls the bicycle based on the comparison(s) in repeated act 610.

The method 600 may be repeated any number of times. For example, the method 600 may be repeated as long as the bicycle is moving. The processor may pause repetition of the method 600 when the processor determines, based on data from the sensor or another sensor of the bicycle (e.g., an accelerometer), that the bicycle is no longer moving. Repetition of the method 600 may resume once the processor determines, based on data from the sensor or the other sensor of the bicycle, the bicycle is moving again.

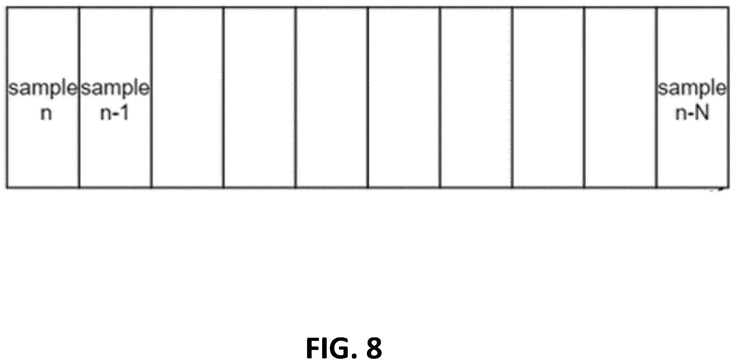

Referring to FIG. 8, the speed of the bicycle determined in act 604 is stored in the first sample buffer of the memory, for example, according to a FIFO method. For example, when the method 600 is repeated and the second speed is determined in repeated act 604, the second speed is stored in the back of a FIFO queue within the first sample buffer of the memory as sample n. An oldest sample stored in the first sample buffer of the memory (e.g., as sample n-N, where N is the size of the first sample buffer or the size of the subset of the samples) is dequeued, and the other previously stored samples (e.g., sample n-1, sample n-2, sample n-3, etc.) shift towards the front of the FIFO queue within the first sample buffer of the memory. The same FIFO storage method applies for the accelerations of the bicycle determined in repeated act 606, respectively, and stored in the second sample buffer of the memory.

The processor may identify wheel slip and wheel lock in any number of other ways. For example, in a second embodiment of a mechanism for identifying a wheel event, wheel slip or wheel lock may be identified by comparing a wheel speed of a front wheel (e.g., the front wheel 112) to a wheel speed of a rear wheel (e.g., the rear wheel 114). For example, the bicycle may include a first wheel speed sensor and a second wheel speed sensor. The first wheel speed sensor and the second wheel speed sensor may be reed switches or Hall effect sensors mounted to a frame of the bicycle. The first wheel speed sensor and the second wheel speed sensor may be mounted on or in any number of different parts of the bicycle including, for example, on a chain stay of the frame, at a fork end (e.g., a dropout) of the frame, or in a drive unit (e.g., the power assist device 140) of the bicycle. The first wheel speed sensor may be configured to sense at least one first sensed element disposed about, for example, a first bicycle wheel (e.g., the rear wheel 114) of the bicycle as the at least one first sensed element rotates through a proximal region of the first wheel speed sensor. The second wheel speed sensor may be configured to sense at least one second sensed element disposed about, for example, a second bicycle wheel (e.g., the front wheel 112) of the bicycle as the at least one second sensed element rotates through a proximal region of the second wheel speed sensor.

A wheel slip event may occur at the rear wheel since the rear wheel is the powered wheel. Similarly, a wheel lock event from braking may occur at the rear wheel since the rear wheel is easier to lock up by a rider pulling hard on the brake lever, even in good traction conditions; comparatively, it is more difficult to lock the front wheel during braking. A comparison of a wheel speed of the rear wheel (e.g., as determined based on data from the first wheel speed sensor) to a wheel speed of the front wheel (e.g., as determined based on data from the second wheel speed sensor) may be used to identify wheel slip or wheel lock in many conditions. If the wheel speed of the front wheel and the wheel speed of the rear wheel differ by at least a threshold percentage (e.g., 10%, 15%, 20%, 30%, or 50%), the processor may assume that the wheel speed of the front wheel corresponds to a true ground speed of the bicycle. The processor may take specific action relating to the identified wheel slip or wheel lock but continue to run automatic shifting based on the wheel speed of the front wheel.

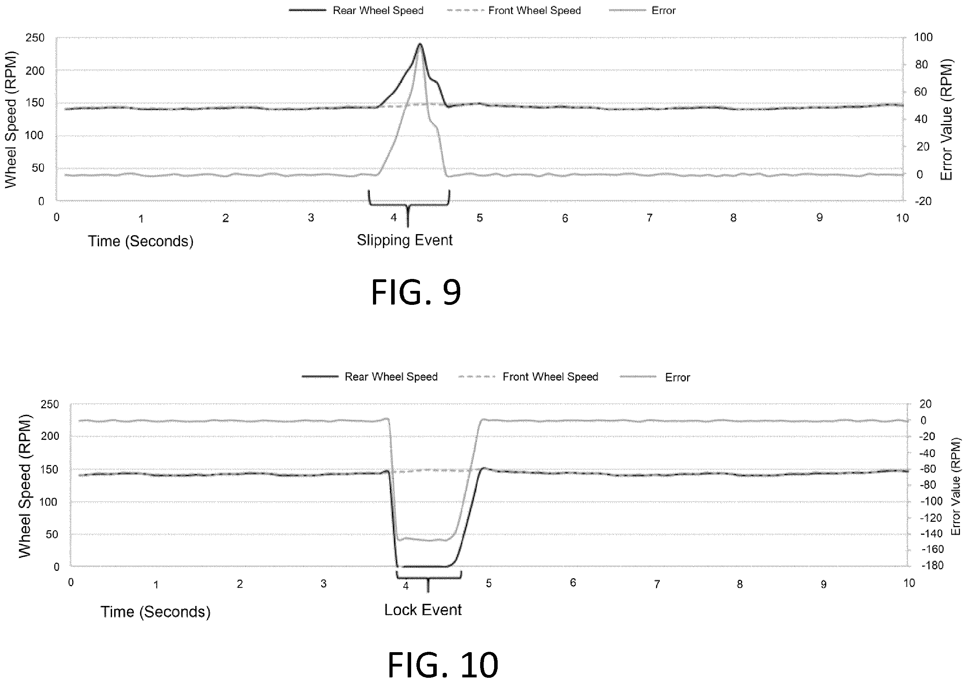

FIG. 9 is a plot of wheel speeds versus time for the wheel speed of the rear wheel (e.g., the bolded line in FIG. 9), the wheel speed of the front wheel (e.g., the dashed line in FIG. 9), and an error (e.g., a difference) between the wheel speed of the rear wheel and the wheel speed of the front wheel. The plot of FIG. 9 illustrates the identification of a wheel slipping event using the second embodiment of the mechanism for identifying a wheel event. Between three seconds and five seconds, for example, in the plot of FIG. 9, the error between the wheel speed of the rear wheel and the wheel speed of the front wheel increases from approximately 0 RPM to almost 100 RPM. This error represents a more than 60% error percentage with reference to the baseline of the wheel speed of the front wheel at approximately 150 RPM. The processor may identify the slipping wheel event according to the second embodiment of the mechanism when the error percentage exceeds the threshold percentage (e.g., 30%, which corresponds to an error of approximately 45 RPM at approximately 4.3 seconds in FIG. 9) with the wheel speed of the rear wheel being greater than the wheel speed of the front wheel.

FIG. 10 is a plot of wheel speeds versus time for the wheel speed of the rear wheel (e.g., the bolded line in FIG.10), the wheel speed of the front wheel (e.g., the dashed line in FIG. 10), and an error (e.g., a difference) between the wheel speed of the rear wheel and the wheel speed of the front wheel. The plot of FIG. 10 illustrates the identification of a wheel lock event using the second embodiment of the mechanism for identifying a wheel event. Between three seconds and five seconds, for example, in the plot of FIG. 10, the error between the wheel speed of the rear wheel and the wheel speed of the front wheel increases from approximately zero to approximately 150 RPM. This error represents an almost 100% error percentage with reference to the baseline of the wheel speed of the front wheel at approximately 150 RPM. The processor may identify the wheel lock event according to the second embodiment of the mechanism when the error percentage exceeds the threshold percentage (e.g., 50%, which corresponds to an error of approximately 75 RPM at approximately 3.8 seconds in FIG. 10) with the wheel speed of the front wheel being greater than the wheel speed of the rear wheel.

As another example, the bicycle may include an accelerometer in one or more components of the bicycle. In a third embodiment of a mechanism for identifying a wheel event, an acceleration of the bicycle in a direction of travel recorded by the accelerometer may be continuously compared to an acceleration measured by the wheel speed sensor of the bicycle, as described above. If, based on this comparison, values of the accelerations differ by more than a predetermined threshold value for a predetermined threshold period of time, a wheel slip or wheel lock event may be detected, and automatic shifting may be deactivated for a predetermined period of time.

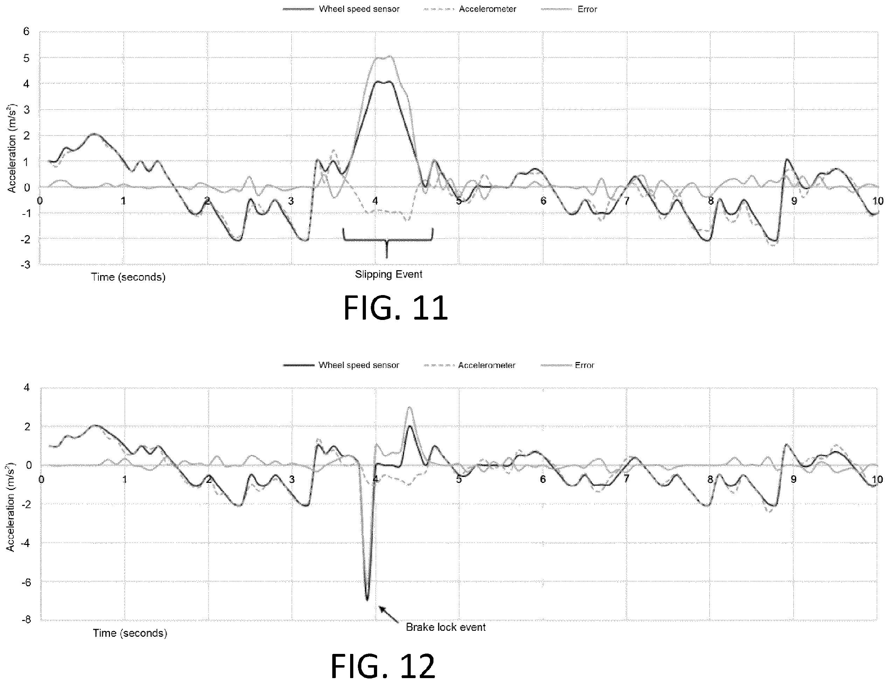

FIG. 11 is a plot of accelerations of the bicycle versus time: the bolded line represents an acceleration of the bicycle determined using the wheel speed sensor; the dashed line represents an acceleration of the bicycle determined using the accelerometer; and the other line represents an error (e.g., a difference) between the acceleration determined using the wheel speed sensor and the acceleration determined using the accelerometer. The plot of FIG. 11 illustrates the identification of a wheel slipping event using the third embodiment of the mechanism for identifying a wheel event. Between three seconds and five seconds, for example, in the plot of FIG. 11, the error between the acceleration determined using the wheel speed sensor and the acceleration determined using the accelerometer increases from approximately 0 RPM to approximately 5.0 RPM. The processor may identify the slipping wheel event according to the third embodiment of the mechanism when the error exceeds a predetermined error threshold (e.g., exceeds a predetermined error threshold of 1.0 m/s², which occurs at approximately 3.7 seconds in FIG. 11) with the acceleration determined using the wheel speed sensor being a positive value.

FIG. 12 is a plot of accelerations of the bicycle versus time: the bolded line represents an acceleration of the bicycle determined using the wheel speed sensor; the dashed line represents an acceleration of the bicycle determined using the accelerometer; and the other line represents an error (e.g., a difference) between the acceleration determined using the wheel speed sensor and the acceleration determined using the accelerometer. The plot of FIG. 12 illustrates the identification of a wheel lock event using the third embodiment of the mechanism for identifying a wheel event. Between three seconds and five seconds, for example, in the plot of FIG. 12, the error between the acceleration determined using the wheel speed sensor and the acceleration determined using the accelerometer decreases from approximately 0 RPM to approximately -7.0 RPM (e.g., or the absolute value of the error increases from approximately 0 RPM to approximately 7.0 RPM). The processor may identify the wheel lock event according to the third embodiment of the mechanism when the error (e.g., or the absolute value of the error) exceeds a predetermined error threshold (e.g., exceeds a predetermined error threshold of 1.0 m/s², which occurs at approximately 3.7 seconds in FIG. 12) with the acceleration determined using the wheel speed sensor being a negative value.

All signals described above may be conditioned. The conditioning may prepare the signals for use by the bicycle control system described above. Examples of conditioning that may be used include, but are not limited to, Kalman Filtering or Finite Impulse Response ("FIR") Filtering.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

## Claims

1. An electronic component for an electric bicycle (100), the electronic component comprising:
a processor (404) configured to:
receive data from a sensor;
determine a first speed and a second speed of the bicycle (100) based on a subset of the received data;
**characterized in that** the processor (404) is configured
- to determine an acceleration of the bicycle (100) based on the determined first speed and the determined second speed of the bicycle (100);
- to compare the determined acceleration of the bicycle (100) to a predetermined threshold acceleration; and
- to control an assist motor (141) of the bicycle (100) based on the comparison.

2. The electronic component of claim 1,
wherein the processor (404) is further configured to identify wheel slip of a bicycle (100) wheel of the bicycle (100) when, based on the comparison, the determined acceleration of the bicycle (100) is greater than the predetermined threshold acceleration.

3. The electronic component of claim 1 or 2,
wherein the control of the assist motor (141) of the electric bicycle (100) based on the comparison comprises reduction of a power of the assist motor (141) for a predetermined period of time when, based on the comparison, the determined acceleration of the electric bicycle (100) is greater than the predetermined threshold acceleration.

4. The electronic component of claim 3,
wherein the predetermined threshold acceleration is a maximum acceleration of the electric bicycle (100).

5. The electronic component of one of the preceding claims,
wherein the processor (404) is further configured to identify a wheel lock of a bicycle (100) wheel of the bicycle (100) when, based on the comparison, the determined acceleration of the electric bicycle (100) is less than the predetermined threshold acceleration.

6. The electronic component of claim 5,
wherein the control of the bicycle (100) based on the comparison comprises deactivation of electronic shifting of the bicycle (100) for a predetermined period of time when, based on the comparison, the determined acceleration of the bicycle (100) is less than the predetermined threshold acceleration,
wherein as an option the predetermined threshold acceleration is a minimum acceleration of the bicycle (100).

7. The electronic component of one of the preceding claims,
wherein the sensor is a bicycle wheel speed sensor (304, 306) and is configured to sense at least one sensed element disposed about a bicycle wheel of the bicycle (100) as the at least one sensed element rotates through a proximal region of the sensor.

8. The electronic component of claim 7, wherein:
the determination of the first speed comprises:
identification of a first time point and a second time point from the subset of the received data, the identified first time point and the identified second time point being times at which the bicycle (100) wheel speed sensor (304, 306) senses a respective sensed element of the at least one sensed element, the second time point being after the first time point;
determination of a first elapsed time based on a difference between the identified second time point and the identified first time point; and
determination of the first speed based on a size of the bicycle (100) wheel and the determined first elapsed time; and
the determination of the second speed comprises:
identification of the second time point and a third time point from the subset of the received data, the identified third time point being a time at which the bicycle wheel speed sensor (304, 306) senses a respective sensed element of the at least one sensed element, the third time point being after the second time point;
determination of a second elapsed time based on a difference between the identified third time point and the identified second time point; and
determination of the second speed based on the size of the bicycle wheel and the determined second elapsed time.

9. The electronic component of claim 8,
wherein the processor (404) is further configured to determine a third speed of the bicycle (100) based on the subset of the received data, the determination of third speed of the bicycle (100) comprising:
identification of the third time point and a fourth time point from the subset of the received data, the identified fourth time point being a time at which the bicycle wheel speed sensor (304, 306) senses a respective sensed element of the at least one sensed element, the fourth time point being after the third time point;
determination of a third elapsed time based on a difference between the identified fourth time point and the identified third time point; and
determination of the third speed based on the size of the bicycle wheel and the determined third elapsed time, and
wherein the determined acceleration of the bicycle (100) is also based on the determined third speed of the bicycle (100).

10. The electronic component of claim 9,
wherein the processor (404) is further configured to:
determine a first acceleration of the bicycle (100) based on the first speed of the bicycle (100) and the second speed of the bicycle (100); and
determine a second acceleration of the bicycle (100) based on the second speed of the bicycle (100) and the third speed of the bicycle (100), and
wherein the determination of the acceleration of the bicycle (100) is based on the determined first acceleration of the bicycle (100) and the determined second acceleration of the bicycle (100).

11. The electronic component of claim 10,
further comprising a memory (406) in communication with the processor (404),
wherein the memory (406) is configured to store the determined first speed of the bicycle (100), the determined second speed of the bicycle (100), and the determined third speed of the bicycle (100) as first samples of a first sample buffer, respectively, and
wherein the memory (406) is configured to store the determined first acceleration of the bicycle (100) and the determined second acceleration of the bicycle (100) as second samples of a second sample buffer, respectively.

12. The electronic component of claim 11,
wherein the received data includes a plurality of data points that identify receipt of magnetic field pulses by the sensor at a plurality of time points, respectively, the plurality of time points including the first time point, the second time point, the third time point, the fourth time point, and one or more additional time points,
wherein the processor (404) is further configured to:
determine one or more additional speeds of the bicycle (100) based on the fourth time point and the one or more additional time points; and
determine one or more additional accelerations of the bicycle (100) based on the determined third speed of the bicycle (100) and the determined one or more additional speeds of the bicycle (100),
wherein the memory (406) is further configured to:
store the determined one or more additional speeds of the bicycle (100) as one or more additional first samples of the first sample buffer, respectively; and
store the determined one or more additional accelerations of the bicycle (100) as one or more additional second samples of the second sample buffer, respectively.

13. The electronic component of claim 12,
wherein the determination of the acceleration of the bicycle (100) comprises an average of the second samples and the one or more additional second samples stored in the second sample buffer of the memory (406), wherein as an option
- the first sample buffer is configured to store a first predetermined number of first samples, and
- the second sample buffer is configured to store a second predetermined number of second samples.

14. The electronic component of claim 12 or 13,
wherein the processor is further configured to:
receive additional data from the sensor, the received additional data identifying a fifth time point at which the bicycle (100) wheel speed sensor (304, 306) senses a respective sensed element of the at least one sensed element, the fifth time point being after the fourth time point;
determine a fourth speed based on the fourth time point and the fifth time point; and
determine a third acceleration based on the determined third speed and the determined fourth speed of the bicycle (100),
wherein when a number of the first samples stored in the first sample buffer is the same as the first predetermined number of first samples, such that the first sample buffer is full, the memory (406) is configured to store the determined fourth speed of the bicycle (100) as one of the first samples of the first sample buffer and replace an oldest of the first samples,
wherein when a number of the second samples stored in the second sample buffer is the same as the second predetermined number of second samples, such that the second sample buffer is full, the memory (406) is configured to store the determined third acceleration of the bicycle (100) as one of the second samples of the second sample buffer and replace an oldest of the second samples, and
wherein the determination of the acceleration of the bicycle (100) comprises an average of the second samples over a predetermined time period.

15. A system for controlling an electric bicycle (100),
the system comprising:
a sensor configured to generate first data, the first data including a plurality of data points generated at a plurality of time points, respectively, wherein the plurality of data points identify reception of magnetic field pulses at the plurality of time points, respectively;
a memory (406) configured to store wheel size data for a wheel of the bicycle (100); and
a processor (404) in communication with the memory (406) and the sensor, the processor (404) being configured to:
receive the first data from the sensor;
determine a first speed and a second speed of the bicycle (100) based on a subset of the received data and the stored wheel size data;
**characterized in that** the processor (404) is configured
- to determine an acceleration of the bicycle (100) based on the determined first speed and the determined second speed of the bicycle (100);
- to compare the determined acceleration of the bicycle (100) to a predetermined threshold acceleration; and
- to control an assist motor (141) of the bicycle (100) based on the comparison.

16. A controller for an electric bicycle (100),
the controller comprising:
a processor (404) configured to:
receive data from a sensor, the received data including a plurality of data points generated at a plurality of time points, respectively, wherein the plurality of data points identify reception of magnetic field pulses at the plurality of time points, respectively;
determine a plurality of speeds of the bicycle (100) based on respective subsets of the received data;
**characterized in that** the processor (404) is configured
- to determine a plurality of accelerations of the bicycle (100) based on the determined plurality of speeds of the bicycle (100); and
- to determine an average acceleration of the determined plurality of accelerations of the bicycle (100) over a predetermined time period;
- to compare the determined average acceleration of the bicycle (100) to a predetermined threshold acceleration; and
- to control an assist motor (141) of the bicycle (100) based on the comparison.

## Patentansprüche

1. Elektronische Komponente für ein Elektrofahrrad (100), wobei die elektronische Komponente umfasst:
einen Prozessor (404), der eingerichtet ist zum:
Empfangen von Daten von einem Sensor;
Bestimmen einer ersten Geschwindigkeit und einer zweiten Geschwindigkeit des Fahrrads (100) auf der Grundlage einer Teilmenge der empfangenen Daten;
**dadurch gekennzeichnet, dass** der Prozessor (404) eingerichtet ist zum:
- Bestimmen einer Beschleunigung des Fahrrads (100) auf der Grundlage der bestimmten ersten Geschwindigkeit und der bestimmten zweiten Geschwindigkeit des Fahrrads (100);
- Vergleichen der bestimmten Beschleunigung des Fahrrads (100) mit einer vorbestimmten Schwellenbeschleunigung und
- Steuern eines Hilfsmotors (141) des Fahrrads (100) auf der Grundlage des Vergleichs.

2. Elektronische Komponente nach Anspruch 1,
wobei der Prozessor (404) ferner dazu eingerichtet ist, Radschlupf eines Fahrrad (100)-Rads des Fahrrads (100) zu erkennen, wenn auf der Grundlage des Vergleichs die bestimmte Beschleunigung des Fahrrads (100) höher ist als die vorbestimmte Schwellenbeschleunigung.

3. Elektronische Komponente nach Anspruch 1 oder 2,
wobei das Steuern des Hilfsmotors (141) des Elektrofahrrads (100) auf der Grundlage des Vergleichs das Reduzieren einer Leistung des Hilfsmotors (141) für einen vorbestimmten Zeitraum umfasst, wenn auf der Grundlage des Vergleichs die bestimmte Beschleunigung des Elektrofahrrads (100) höher ist als die vorbestimmte Schwellenbeschleunigung.

4. Elektronische Komponente nach Anspruch 3,
wobei die vorbestimmte Schwellenbeschleunigung eine maximale Beschleunigung des Elektrofahrrads (100) ist.

5. Elektronische Komponente nach einem der vorangehenden Ansprüche,
wobei der Prozessor (404) ferner dazu eingerichtet ist, ein Blockieren eines Fahrrad (100)-Rads des Fahrrads (100) zu erkennen, wenn auf der Grundlage des Vergleichs die bestimmte Beschleunigung des Elektrofahrrads (100) niedriger ist als die vorbestimmte Schwellenbeschleunigung.

6. Elektronische Komponente nach Anspruch 5,
wobei das Steuern des Fahrrads (100) auf der Grundlage des Vergleichs das Deaktivieren der elektronischen Schaltung des Fahrrads (100) für einen vorbestimmten Zeitraum umfasst, wenn auf der Grundlage des Vergleichs die bestimmte Beschleunigung des Fahrrads (100) niedriger ist als die vorbestimmte Schwellenbeschleunigung,
wobei die vorbestimmte Schwellenbeschleunigung optional eine Mindestbeschleunigung des Fahrrads (100) ist.

7. Elektronische Komponente nach einem der vorangehenden Ansprüche,
wobei der Sensor ein Raddrehzahlsensor (304, 306) eines Fahrrads und dazu eingerichtet ist, wenigstens ein Sensorelement zu erfassen, das um ein Fahrradrad des Fahrrads (100) angeordnet ist, wenn sich das wenigstens eine Sensorelement durch einen proximalen Bereich des Sensors dreht.

8. Elektronische Komponente nach Anspruch 7, wobei:
das Bestimmen der ersten Geschwindigkeit umfasst:
Feststellen eines ersten Zeitpunkts und eines zweiten Zeitpunkts aus der Teilmenge der empfangenen Daten, wobei der festgestellte erste Zeitpunkt und der festgestellte zweite Zeitpunkt Zeitpunkte sind, zu denen der Raddrehzahlsensor (304, 306) des Fahrrads (100) ein jeweiliges Sensorelement des wenigstens einen Sensorelements erfasst, wobei der zweite Zeitpunkt nach dem ersten Zeitpunkt liegt;
Bestimmen einer ersten verstrichenen Zeit auf der Grundlage einer Differenz zwischen dem festgestellten zweiten Zeitpunkt und dem festgestellten ersten Zeitpunkt und
Bestimmen der ersten Geschwindigkeit auf der Grundlage einer Größe des Fahrrad (100)-Rads und der bestimmten ersten verstrichenen Zeit; und
das Bestimmen der zweiten Geschwindigkeit umfasst:
Feststellen des zweiten Zeitpunkts und eines dritten Zeitpunkts aus der Teilmenge der empfangenen Daten, wobei der festgestellte dritte Zeitpunkt ein Zeitpunkt ist, zu dem der Raddrehzahlsensor (304, 306) des Fahrrads ein jeweiliges Sensorelement des wenigstens einen Sensorelements erfasst, wobei der dritte Zeitpunkt nach dem zweiten Zeitpunkt liegt;
Bestimmen einer zweiten verstrichenen Zeit auf der Grundlage einer Differenz zwischen dem festgestellten dritten Zeitpunkt und dem festgestellten zweiten Zeitpunkt und
Bestimmen der zweiten Geschwindigkeit auf der Grundlage der Größe des Fahrradrads und der bestimmten zweiten verstrichenen Zeit.

9. Elektronische Komponente nach Anspruch 8,
wobei der Prozessor (404) ferner dazu eingerichtet ist, eine dritte Geschwindigkeit des Fahrrads (100) auf der Grundlage der Teilmenge der empfangenen Daten zu bestimmen, wobei das Bestimmen der dritten Geschwindigkeit des Fahrrads (100) umfasst:
Feststellen des dritten Zeitpunkts und eines vierten Zeitpunkts aus der Teilmenge der empfangenen Daten, wobei der festgestellte vierte Zeitpunkt ein Zeitpunkt ist, zu dem der Raddrehzahlsensor (304, 306) des Fahrrads ein jeweiliges Sensorelement des wenigstens einen Sensorelements erfasst, wobei der vierte Zeitpunkt nach dem dritten Zeitpunkt liegt;
Bestimmen einer dritten verstrichenen Zeit auf der Grundlage einer Differenz zwischen dem festgestellten vierten Zeitpunkt und dem festgestellten dritten Zeitpunkt und
Bestimmen der dritten Geschwindigkeit auf der Grundlage der Größe des Fahrradrads und der bestimmten dritten verstrichenen Zeit, und
wobei die bestimmte Beschleunigung des Fahrrads (100) ferner auf der bestimmten dritten Geschwindigkeit des Fahrrads (100) basiert.

10. Elektronische Komponente nach Anspruch 9,
wobei der Prozessor (404) ferner eingerichtet ist zum:
Bestimmen einer ersten Beschleunigung des Fahrrads (100) auf der Grundlage der ersten Geschwindigkeit des Fahrrads (100) und der zweiten Geschwindigkeit des Fahrrads (100) und
Bestimmen einer zweiten Beschleunigung des Fahrrads (100) auf der Grundlage der zweiten Geschwindigkeit des Fahrrads (100) und der dritten Geschwindigkeit des Fahrrads (100), und
wobei das Bestimmen der Beschleunigung des Fahrrads (100) auf der bestimmten ersten Beschleunigung des Fahrrads (100) und der bestimmten zweiten Beschleunigung des Fahrrads (100) basiert.

11. Elektronische Komponente nach Anspruch 10,
die ferner einen Speicher (406) umfasst, der mit dem Prozessor (404) kommuniziert,
wobei der Speicher (406) dazu eingerichtet ist, die bestimmte erste Geschwindigkeit des Fahrrads (100), die bestimmte zweite Geschwindigkeit des Fahrrads (100) und die bestimmte dritte Geschwindigkeit des Fahrrads (100) jeweils als ersten Abtastwert eines ersten Abtastwertpuffers zu speichern, und
wobei der Speicher (406) dazu eingerichtet ist, die bestimmte erste Beschleunigung des Fahrrads (100) und die bestimmte zweite Beschleunigung des Fahrrads (100) jeweils als zweiten Abtastwert eines zweiten Abtastwertpuffers zu speichern.

12. Elektronische Komponente nach Anspruch 11,
wobei die empfangenen Daten eine Mehrzahl von Datenpunkten umfassen, die den Empfang von Magnetfeldimpulsen durch den Sensor zu einer Mehrzahl von Zeitpunkten feststellen, wobei die Mehrzahl von Zeitpunkten den ersten Zeitpunkt, den zweiten Zeitpunkt, den dritten Zeitpunkt, den vierten Zeitpunkt und einen oder mehrere zusätzliche Zeitpunkte umfasst,
wobei der Prozessor (404) ferner eingerichtet ist zum:
Bestimmen einer oder mehrerer zusätzlicher Geschwindigkeiten des Fahrrads (100) auf der Grundlage des vierten Zeitpunkts und des einen oder der mehreren zusätzlichen Zeitpunkte und
Bestimmen einer oder mehrerer zusätzlicher Beschleunigungen des Fahrrads (100) auf der Grundlage der bestimmten dritten Geschwindigkeit des Fahrrads (100) und der bestimmten einen oder mehreren zusätzlichen Geschwindigkeiten des Fahrrads (100),
wobei der Speicher (406) ferner eingerichtet ist zum:
Speichern der bestimmten einen oder mehreren zusätzlichen Geschwindigkeiten des Fahrrads (100) jeweils als einen oder mehrere zusätzliche erste Abtastwerte des ersten Abtastwertpuffers und
Speichern der bestimmten einen oder mehreren zusätzlichen Beschleunigungen des Fahrrads (100) jeweils als einen oder mehrere zusätzliche zweite Abtastwerte des zweiten Abtastwertpuffers.

13. Elektronische Komponente nach Anspruch 12,
wobei das Bestimmen der Beschleunigung des Fahrrads (100) einen Durchschnitt der zweiten Abtastwerte und des einen oder der mehreren zusätzlichen zweiten Abtastwerte umfasst, die in dem zweiten Abtastwertpuffer des Speichers (406) gespeichert sind,
wobei optional
- der erste Abtastwertpuffer dazu eingerichtet ist, eine erste vorbestimmte Anzahl erster Abtastwerte zu speichern, und
- der zweite Abtastwertpuffer dazu eingerichtet ist, eine zweite vorbestimmte Anzahl zweiter Abtastwerte zu speichern.

14. Elektronische Komponente nach Anspruch 12 oder 13,
wobei der Prozessor ferner eingerichtet ist zum:
Empfangen zusätzlicher Daten von dem Sensor, wobei die empfangenen zusätzlichen Daten einen fünften Zeitpunkt feststellen, zu dem der Raddrehzahlsensor (304, 306) des Fahrrads (100) ein jeweiliges Sensorelement des wenigstens einen Sensorelements erfasst, wobei der fünfte Zeitpunkt nach dem vierten Zeitpunkt liegt;
Bestimmen einer vierten Geschwindigkeit auf der Grundlage des vierten Zeitpunkts und des fünften Zeitpunkts und
Bestimmen einer dritten Beschleunigung auf der Grundlage der bestimmten dritten Geschwindigkeit und der bestimmten vierten Geschwindigkeit des Fahrrads (100),
wobei der Speicher (406) dazu eingerichtet ist, die bestimmte vierte Geschwindigkeit des Fahrrads (100) als einen der ersten Abtastwerte des ersten Abtastwertpuffers zu speichern und einen ältesten der ersten Abtastwerte zu ersetzen, wenn eine Anzahl der in dem ersten Abtastwertpuffer gespeicherten ersten Abtastwerte gleich der ersten vorbestimmten Anzahl erster Abtastwerte ist, sodass der erste Abtastwertpuffer voll ist,
wobei der Speicher (406) dazu eingerichtet ist, die bestimmte dritte Beschleunigung des Fahrrads (100) als einen der zweiten Abtastwerte des zweiten Abtastwertpuffers zu speichern und einen ältesten der zweiten Abtastwerte zu ersetzen, wenn eine Anzahl der in dem zweiten Abtastwertpuffer gespeicherten zweiten Abtastwerte gleich der zweiten vorbestimmten Anzahl zweiter Abtastwerte ist, sodass der zweite Abtastwertpuffer voll ist, und
wobei das Bestimmen der Beschleunigung des Fahrrads (100) einen Durchschnitt der zweiten Abtastwerte über einen vorbestimmten Zeitraum umfasst.

15. System zum Steuern eines Elektrofahrrads (100),
wobei das System umfasst:
einen Sensor, der zum Erzeugen erster Daten eingerichtet ist, wobei die ersten Daten eine Mehrzahl von Datenpunkten umfassen, die jeweils zu einer Mehrzahl von Zeitpunkten erzeugt werden, wobei die Mehrzahl von Datenpunkten den Empfang von Magnetfeldimpulsen jeweils zu der Mehrzahl von Zeitpunkten feststellt;
einen Speicher (406), der zum Speichern von Radgrößendaten für ein Rad des Fahrrads (100) eingerichtet ist; und
einen Prozessor (404), der mit dem Speicher (406) und dem Sensor kommuniziert, wobei der Prozessor (404) eingerichtet ist zum:
Empfangen der ersten Daten von dem Sensor;
Bestimmen einer ersten Geschwindigkeit und einer zweiten Geschwindigkeit des Fahrrads (100) auf der Grundlage einer Teilmenge der empfangenen Daten und der gespeicherten Radgrößendaten;
**dadurch gekennzeichnet, dass** der Prozessor (404) eingerichtet ist zum:
- Bestimmen einer Beschleunigung des Fahrrads (100) auf der Grundlage der bestimmten ersten Geschwindigkeit und der bestimmten zweiten Geschwindigkeit des Fahrrads (100);
- Vergleichen der bestimmten Beschleunigung des Fahrrads (100) mit einer vorbestimmten Schwellenbeschleunigung und
- Steuern eines Hilfsmotors (141) des Fahrrads (100) auf der Grundlage des Vergleichs.

16. Steuergerät für ein Elektrofahrrad (100),
wobei das Steuergerät umfasst:
einen Prozessor (404), der eingerichtet ist zum:
Empfangen von Daten von einem Sensor, wobei die empfangenen Daten eine Mehrzahl von Datenpunkten umfassen, die jeweils zu einer Mehrzahl von Zeitpunkten erzeugt werden, wobei die Mehrzahl von Datenpunkten den Empfang von Magnetfeldimpulsen jeweils zu der Mehrzahl von Zeitpunkten feststellt;
Bestimmen einer Mehrzahl von Geschwindigkeiten des Fahrrads (100) auf der Grundlage jeweiliger Teilmengen der empfangenen Daten;
**dadurch gekennzeichnet, dass** der Prozessor (404) eingerichtet ist zum:
- Bestimmen einer Mehrzahl von Beschleunigungen des Fahrrads (100) auf der Grundlage der bestimmten Mehrzahl von Geschwindigkeiten des Fahrrads (100) und
- Bestimmen einer Durchschnittsbeschleunigung der bestimmten Mehrzahl von Beschleunigungen des Fahrrads (100) über einen vorbestimmten Zeitraum;
- Vergleichen der bestimmten Durchschnittsbeschleunigung des Fahrrads (100) mit einer vorbestimmten Schwellenbeschleunigung und
- Steuern eines Hilfsmotors (141) des Fahrrads (100) auf der Grundlage des Vergleichs.

## Revendications

1. Composant électronique pour bicyclette électrique (100), le composant électronique comprenant :
un processeur (404) configuré pour :
recevoir des données d'un capteur ;
déterminer une première vitesse et une deuxième vitesse de la bicyclette (100)
sur la base d'un sous-ensemble des données reçues ;
**caractérisé en ce que** le processeur (404) est configuré
- pour déterminer une accélération de la bicyclette (100) sur la base de la première vitesse déterminée et de la deuxième vitesse déterminée de la bicyclette (100) ;
- pour comparer l'accélération déterminée de la bicyclette (100) à une accélération seuil prédéterminée ; et
- pour commander un moteur d'assistance (141) de la bicyclette (100) sur la base de la comparaison.

2. Composant électronique selon la revendication 1,
dans lequel le processeur (404) est en outre configuré pour identifier le patinage d'une roue de bicyclette (100) de la bicyclette (100) lorsque, sur la base de la comparaison, l'accélération déterminée de la bicyclette (100) est supérieure à l'accélération seuil prédéterminée.

3. Composant électronique selon la revendication 1 ou 2,
dans lequel la commande du moteur d'assistance (141) de la bicyclette électrique (100) sur la base de la comparaison comprend la réduction d'une puissance du moteur d'assistance (141) pendant une période de temps prédéterminée lorsque, sur la base de la comparaison, l'accélération déterminée de la bicyclette électrique (100) est supérieure à l'accélération seuil prédéterminée.

4. Composant électronique selon la revendication 3,
dans lequel l'accélération seuil prédéterminée est une accélération maximale de la bicyclette électrique (100).

5. Composant électronique selon l'une des revendications précédentes,
dans lequel le processeur (404) est en outre configuré pour identifier un blocage de roue d'une roue de bicyclette (100) de la bicyclette (100) lorsque, sur la base de la comparaison, l'accélération déterminée de la bicyclette électrique (100) est inférieure à l'accélération seuil prédéterminée.

6. Composant électronique selon la revendication 5,
dans lequel la commande de la bicyclette (100) basée sur la comparaison comprend la désactivation du changement de vitesse électronique de la bicyclette (100) pendant une période de temps prédéterminée lorsque, sur la base de la comparaison, l'accélération déterminée de la bicyclette (100) est inférieure à l'accélération seuil prédéterminée,
dans lequel, en option, l'accélération seuil prédéterminée est une accélération minimale de la bicyclette (100).

7. Composant électronique selon l'une des revendications précédentes,
dans lequel le capteur est un capteur de vitesse de roue de bicyclette (304, 306) et est configuré pour détecter au moins un élément détecté disposé sur la périphérie d'une roue de bicyclette de la bicyclette (100) lorsque ledit au moins un élément détecté passe en rotation dans une région proximale du capteur.

8. Composant électronique selon la revendication 7, dans lequel :
la détermination de la première vitesse comprend :
l'identification d'un premier point temporel et d'un deuxième point temporel à partir du sous-ensemble des données reçues, le premier point temporel identifié et le deuxième point temporel identifié étant des instants auxquels le capteur de vitesse de roue (304, 306) de bicyclette (100) détecte un élément détecté respectif dudit au moins un élément détecté, le deuxième point temporel étant postérieur au premier point temporel ;
la détermination d'une première durée écoulée sur la base d'une différence entre le deuxième point temporel identifié et le premier point temporel identifié ; et
la détermination de la première vitesse sur la base de la taille de la roue de la bicyclette (100) et de la première durée écoulée déterminée ; et
la détermination de la deuxième vitesse comprend :
l'identification du deuxième point temporel et d'un troisième point temporel à partir du sous-ensemble des données reçues, le troisième point temporel identifié étant un instant auquel le capteur de vitesse de roue de bicyclette (304, 306) détecte un élément détecté respectif dudit au moins un élément détecté, le troisième point temporel étant postérieur au deuxième point temporel ;
la détermination d'une deuxième durée écoulée sur la base d'une différence entre le troisième point temporel identifié et le deuxième point temporel identifié ; et
la détermination de la deuxième vitesse sur la base de la taille de la roue de la bicyclette et de la deuxième durée écoulée déterminée.

9. Composant électronique selon la revendication 8,
dans lequel le processeur (404) est en outre configuré pour déterminer une troisième vitesse de la bicyclette (100) sur la base du sous-ensemble des données reçues, la détermination de la troisième vitesse de la bicyclette (100) comprenant :
l'identification du troisième point temporel et d'un quatrième point temporel à partir du sous-ensemble des données reçues, le quatrième point temporel identifié étant un instant auquel le capteur de vitesse de roue de bicyclette (304, 306) détecte un élément détecté respectif dudit au moins un élément détecté, le quatrième point temporel étant postérieur au troisième point temporel ;
la détermination d'une troisième durée écoulée sur la base d'une différence entre le quatrième point temporel identifié et le troisième point temporel identifié ; et
la détermination de la troisième vitesse sur la base de la taille de la roue de bicyclette et de la troisième durée écoulée déterminée, et
dans lequel l'accélération déterminée de la bicyclette (100) est également basée sur la troisième vitesse déterminée de la bicyclette (100).

10. Composant électronique selon la revendication 9,
dans lequel le processeur (404) est en outre configuré pour :
déterminer une première accélération de la bicyclette (100) sur la base de la première vitesse de la bicyclette (100) et de la deuxième vitesse de la bicyclette (100) ; et
déterminer une deuxième accélération de la bicyclette (100) sur la base de la deuxième vitesse de la bicyclette (100) et de la troisième vitesse de la bicyclette (100), et
dans lequel la détermination de l'accélération de la bicyclette (100) est basée sur la première accélération déterminée de la bicyclette (100) et la deuxième accélération déterminée de la bicyclette (100).

11. Composant électronique selon la revendication 10,
comprenant en outre une mémoire (406) en communication avec le processeur (404),
dans lequel la mémoire (406) est configurée pour stocker la première vitesse déterminée de la bicyclette (100), la deuxième vitesse déterminée de la bicyclette (100) et la troisième vitesse déterminée de la bicyclette (100) en tant que premiers échantillons d'un tampon de premiers échantillons, respectivement, et
dans lequel la mémoire (406) est configurée pour stocker la première accélération déterminée de la bicyclette (100) et la deuxième accélération déterminée de la bicyclette (100) en tant que deuxièmes échantillons d'un tampon de deuxièmes échantillons, respectivement.

12. Composant électronique selon la revendication 11,
dans lequel les données reçues comprennent une pluralité de points de données qui identifient la réception d'impulsions de champ magnétique par le capteur à une pluralité de points temporels, respectivement, la pluralité de points temporels comprenant le premier point temporel, le deuxième point temporel, le troisième point temporel, le quatrième point temporel et un ou plusieurs points temporels supplémentaires,
dans lequel le processeur (404) est en outre configuré pour :
déterminer une ou plusieurs vitesses supplémentaires de la bicyclette (100) sur la base du quatrième point temporel et des un ou plusieurs points temporels supplémentaires ; et
déterminer une ou plusieurs accélérations supplémentaires de la bicyclette (100) sur la base de la troisième vitesse déterminée de la bicyclette (100) et des une ou plusieurs vitesses supplémentaires déterminées de la bicyclette (100),
dans lequel la mémoire (406) est en outre configurée pour :
stocker les une ou plusieurs vitesses supplémentaires déterminées de la bicyclette (100) en tant qu'un ou plusieurs premiers échantillons supplémentaires du tampon de premiers échantillons, respectivement ; et
stocker les une ou plusieurs accélérations supplémentaires déterminées de la bicyclette (100) en tant qu'un ou plusieurs deuxièmes échantillons supplémentaires du tampon de deuxièmes échantillons, respectivement.

13. Composant électronique selon la revendication 12,
dans lequel la détermination de l'accélération de la bicyclette (100) comprend une moyenne des deuxièmes échantillons et des un ou plusieurs deuxièmes échantillons supplémentaires stockés dans le tampon de deuxièmes échantillons de la mémoire (406), dans lequel en option
- le tampon de premiers échantillons est configuré pour stocker un premier nombre prédéterminé de premiers échantillons, et
- le tampon de deuxièmes échantillons est configuré pour stocker un second nombre prédéterminé de deuxièmes échantillons.

14. Composant électronique selon la revendication 12 ou 13,
dans lequel le processeur est en outre configuré pour :
recevoir des données supplémentaires du capteur, les données supplémentaires reçues identifiant un cinquième point temporel auquel le capteur de vitesse de roue (304, 306) de bicyclette (100) détecte un élément détecté respectif dudit au moins un élément détecté, le cinquième point temporel étant postérieur au quatrième point temporel ;
déterminer une quatrième vitesse sur la base du quatrième point temporel et du cinquième point temporel ; et
déterminer une troisième accélération sur la base de la troisième vitesse déterminée et de la quatrième vitesse déterminée de la bicyclette (100),
dans lequel lorsqu'un nombre des premiers échantillons stockés dans le tampon de premiers échantillons est égal au premier nombre prédéterminé de premiers échantillons, de sorte que le tampon de premiers échantillons est plein, la mémoire (406) est configurée pour stocker la quatrième vitesse déterminée de la bicyclette (100) en tant que l'un des premiers échantillons du tampon de premiers échantillons et remplacer le plus ancien des premiers échantillons,
dans lequel, lorsqu'un nombre des deuxièmes échantillons stockés dans le tampon de deuxièmes échantillons est égal au second nombre prédéterminé de deuxièmes échantillons, de sorte que le tampon de deuxièmes échantillons est plein, la mémoire (406) est configurée pour stocker la troisième accélération déterminée de la bicyclette (100) en tant que l'un des deuxièmes échantillons du tampon de deuxièmes échantillons et remplacer le plus ancien des deuxièmes échantillons, et
dans lequel la détermination de l'accélération de la bicyclette (100) comprend une moyenne des deuxièmes échantillons sur une période de temps prédéterminée.

15. Système de commande d'une bicyclette électrique (100),
le système comprenant :
un capteur configuré pour générer des premières données, les premières données comprenant une pluralité de points de données générés à une pluralité de points temporels, respectivement, dans lequel la pluralité de points de données identifient la réception d'impulsions de champ magnétique à la pluralité de points temporels, respectivement ;
une mémoire (406) configurée pour stocker des données de taille de roue pour une roue de la bicyclette (100) ; et
un processeur (404) en communication avec la mémoire (406) et le capteur, le processeur (404) étant configuré pour :
recevoir les premières données du capteur ;
déterminer une première vitesse et une deuxième vitesse de la bicyclette (100) sur la base d'un sous-ensemble des données reçues et des données de taille de roue stockées ;
**caractérisé en ce que** le processeur (404) est configuré
- pour déterminer une accélération de la bicyclette (100) sur la base de la première vitesse déterminée et de la deuxième vitesse déterminée de la bicyclette (100) ;
- pour comparer l'accélération déterminée de la bicyclette (100) à une accélération seuil prédéterminée ; et
- pour commander un moteur d'assistance (141) de la bicyclette (100) sur la base de la comparaison.

16. Dispositif de commande pour bicyclette électrique (100), le dispositif de commande comprenant :
un processeur (404) configuré pour :
recevoir des données d'un capteur, les données reçues comprenant une pluralité de points de données générés à une pluralité de points temporels, respectivement, dans lequel la pluralité de points de données identifient la réception d'impulsions de champ magnétique à la pluralité de points temporels, respectivement ;
déterminer une pluralité de vitesses de la bicyclette (100) sur la base de sous-ensembles respectifs des données reçues ;
**caractérisé en ce que** le processeur (404) est configuré
- pour déterminer une pluralité d'accélérations de la bicyclette (100) sur la base de la pluralité déterminée de vitesses de la bicyclette (100) ; et
- pour déterminer une accélération moyenne de la pluralité déterminée d'accélérations de la bicyclette (100) sur une période de temps prédéterminée ;
- pour comparer l'accélération moyenne déterminée de la bicyclette (100) à une accélération seuil prédéterminée ; et
- pour commander un moteur d'assistance (141) de la bicyclette (100) sur la base de la comparaison.
